# EUROPEAN PATENT APPLICATION

(11) **EP 3 825 740 A1**
(43) Date of publication of application: **26.05.2021**
(21) Application number: 18927048.1
(22) Date of filing: 09.11.2018
(51) Int. Cl.: G02B 5/08

(54) **METHOD FOR MANUFACTURING STEREOSCOPIC IMAGE FORMATION DEVICE AND STEREOSCOPIC IMAGE FORMATION DEVICE**

(30) Priority: 18.07.2018 JP 2018134988
(71) Applicant: Asukanet Company, Ltd., Hiroshima-shi, Hiroshima 731-0138 (JP)
(72) Inventor: OTSUBO Makoto, Hiroshima-shi, Hiroshima 731-0138 (JP)
(74) Representative: Vossius & Partner Patentanwälte Rechtsanwälte mbB
(86) International application number: PCT/JP2018/041731
(87) International publication number: WO 2020/017071

(57) **Abstract**

For manufacturing a stereoscopic image formation device 10, two molded preforms 21 made from a transparent first synthetic resin each having triangular-cross-sectional grooves 16 and triangular-cross-sectional ridges 17 alternately spaced in parallel on one side of a plate body 13, each groove 16 of which includes an inclined surface 15 and a perpendicular surface 14, are manufactured by injection molding, and first and second light-control panels 11 and 11a each manufactured from one of the molded preforms 21 by metal spraying the perpendicular surfaces 14 to form perpendicular light-reflective surfaces 12, are overlaid with each other in a manner where the uneven surface sides of the first and second panels 11 and 11a face each other with a transparent second synthetic resin being in between, hardened, and integrated. In the injection molding, a mold set 40 including thereinside a space 39 formed correspondingly to the shape of the molded preform 21 is used, a molten first synthetic resin 46 is provided into the space 39 of the mold set 40 heated and adjusted to a temperature at which the first synthetic resin 46 is flow-able, and after the resin 46 spreads and reaches tips 45 of parts of the space 39 for forming the ridges 17 of the molded preform 21 each having the triangular cross-section, the mold set 40 is rapidly cooled. The difference between the refractive indexes η1 and η2 of the first and second synthetic resins is 0.1 or less.

## Description

### Technical Field

The present invention is related to a stereoscopic image formation device using a plurality of perpendicular light-reflective surfaces (mirror surfaces) perpendicularly formed, which are disposed with gaps therebetween and a manufacturing method of the device. The stereoscopic image in here includes cases of displaying a two-dimensional image (planar image) besides a three-dimensional image.

### Background Art

As a device for forming a stereoscopic image using light (scattering light) emitted from the surface of an object, there is e.g. an optical image formation device set forth in patent literature 1. This optical image formation device is configured, as shown in Figs. 1 to 3 of the publication of patent literature 1, by using a first light-control panel and a second light-control panel, each of which is formed by arranging a large number of band-shaped flat light-reflectors in a constant pitch inside a transparent flat plate such that the flat light-reflectors are perpendicular to the surface on one side of the transparent flat plate, and disposing the first and second light-control panels such that the one sides of the first and second light-control panels face each other in a manner where the flat light-reflectors of the first light-control panel and the flat light-reflectors of the second light-control panel orthogonally cross. However, there is a problem that the optical image formation device cannot form bright stereoscopic images since the angle of incidence is limited because the optical image formation device uses the total reflection and besides the effective area of the incident light is small.

In light of this, there has been suggested a method, such as patent literature 2, of preparing two light-control panels made by using a transparent resin as the material, each of which is provided with an uneven board including quadrilateral-cross-sectional grooves formed by parallel banks on one side thereof and light-reflectors formed on the opposing parallel lateral faces of each groove, and disposing the two light-control panels so as to face each other in a manner where the light-reflectors of one of the light-control panels and the light-reflectors of the other one of the light-control panels orthogonally cross or cross at any angle.

However, there is a problem of having an extreme difficulty in demolding if the height of the banks of each uneven board becomes higher (i.e. the depth of the grooves becomes deeper) when molding by injection. Besides, it is difficult to make the lateral faces of the parallel grooves into mirror surfaces even by using the technique in patent literature 2, which leads to a problem that variation in the products occurs frequently.

In cope with this, there has been suggested a method, such as patent literatures 3 and 4, in which a molded preform is manufactured by forming triangular-cross-sectional grooves disposed in parallel and triangular-cross-sectional ridges disposed in parallel on the top side of a transparent plate material, further in which the triangular-cross-sectional grooves each have an inclined surface and a perpendicular surface, the triangular-cross-sectional ridges are each formed by the adjacent triangular-cross-sectional grooves, metal reflective surfaces are formed to the molded preform by spraying a metal to the perpendicular surfaces from a direction along the inclined surfaces in a manner where the inclined surfaces become in shadow, first and second light-control panels are each formed using this molded preform, the grooves of the first and second light-control panels are filled up with a transparent resin, and the first and second light-control panels are overlaid with each other in a manner where the metal reflective surfaces of the first light-control panel and the metal reflective surfaces of the second light-control panel orthogonally cross when viewed from above.

In this case, molding and demolding are easier since the grooves formed in parallel and in a large number have the inclined surfaces and the perpendicular surfaces as mentioned above and each groove becomes wider toward the opening side. Also, since the metal spraying to the perpendicular surfaces is performed from a direction along the inclined surfaces in a manner where the inclined surfaces become in shadow, the metal reflective surfaces are hard to be formed on the inclined surfaces.

### Citation List

### Patent Literature

Patent Literature 1: International Publication No. WO 2009/131128
Patent Literature 2: International Publication No. WO 2015/033645
Patent Literature 3: Japanese Patent No. 6203989
Patent Literature 4: Japanese Patent No. 6203978

### Summary of Invention

### Technical Problem

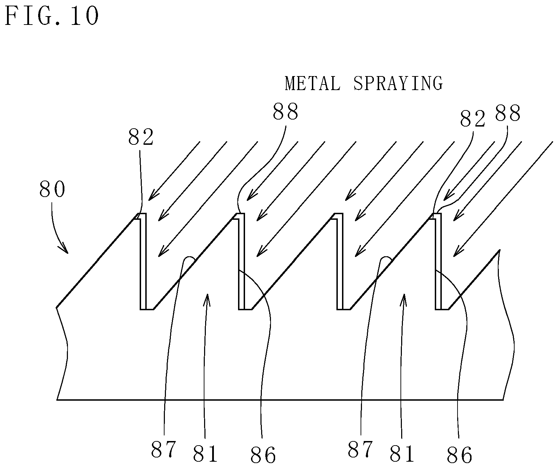

In patent literature 3, when manufacturing the molded preform 80, a minute-flat-surface 82 is formed on the triangular-cross-sectional corner (the top portion) of each ridge 81 as shown in Fig. 10. This is because it is impossible to form a mold set to have grooves with bottom corners each taking the form of an acute angle, and also this is in order to improve the accuracy of the dimensions in molding and to prevent flaws from occurring in the manufacturing process. With regard to the width of each minute-flat-surface, patent literature 4 describes it as 0.01 to 0.1 times the pitch of the ridges and patent literature 3 describes that it is preferred to be approximately 0.02 to 0.2 times the base width of each ridge (i.e. it is far beyond 10 µm) . In either case, the width of each minute-flat-surface is large for the width of the opening of each groove, and thus the following problem occurs.

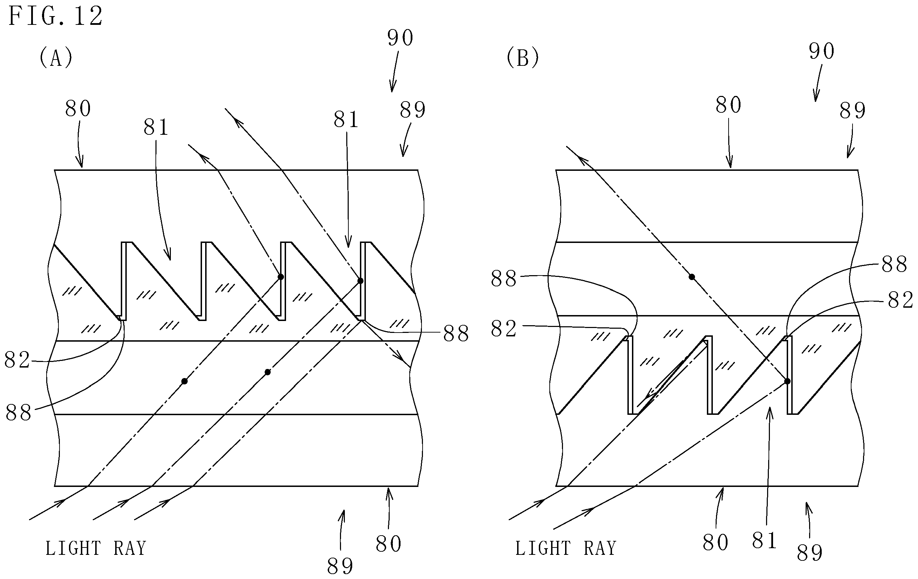

When performing the metal spraying to the perpendicular surfaces 86 of the ridges 81, each of which is provided with the minute-flat-surface 82, from a direction along the inclined surfaces 87, the metal reflective surfaces 88 are formed not only on the perpendicular surfaces 86 but also on the minute-flat-surfaces 82 as shown in Fig. 10. In a case where the stereoscopic image formation device 90 manufactured by using the molded preforms 80 (light-control panels 89), the metal reflective surfaces 88 of which are formed also on the minute-flat-surfaces 82, is used as shown in Figs. 12(A) and 12(B), it turned out that the following problems arise even if each flat surface (minute-flat-surface 82) is formed to be narrow in width (e.g. approximately 0.01 times the pitch of the ridges): (1) scattering and regular reflection of the light rays occur due to the metal reflective surfaces 88 on the minute-flat-surfaces 82, thereby the stereoscopic image looks like it is washed out and glowing, and (2) the light rays passing through the stereoscopic image formation device 90 and contributing to the image formation, reflect off the metal reflective surfaces 88 on the minute-flat-surfaces 82, thereby the stereoscopic image becomes somewhat dark. The larger the width of each minute-flat-surface 82 is, the more prominent these problems become.

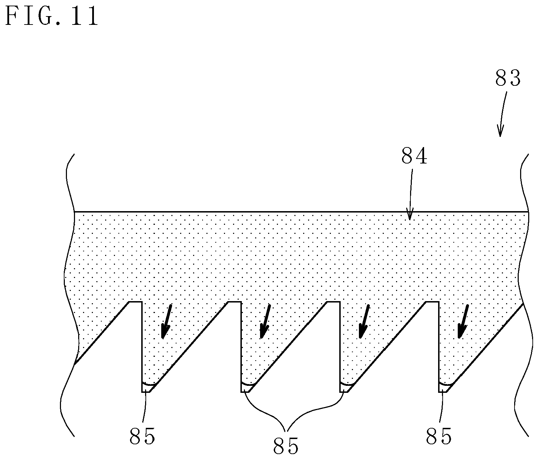

However, the width of each minute-flat-surface 82 (the width in the right and left directions in Fig. 10) is narrow for the overall dimensions of each molded preform 80, and the temperature of the mold set is lower than the temperature at which a resin can be flow-able. When manufacturing (i.e. when injection molding) each molded preform 80 by using the mold set 83 shown in Fig. 11, this makes it difficult to make the molten transparent resin 84 spread and reach tips 85 of (the grooves of) the space of the mold set 83, which are for forming the minute-flat-surfaces 82. Nevertheless, making wider the width of each minute-flat-surface 82 in order to help the transparent resin 84 to be smoothly filled up will make the height of the perpendicular surfaces 86 shown in Fig. 10 lower, and this causes the aspect ratio (h/p) that is the ratio of the height h of the perpendicular surfaces 86 to the pitch p of the perpendicular surfaces 86 to become lower. This results in a shortcoming that a clear stereoscopic image cannot be provided, and the stereoscopic image looks washed out due to the light rays reflected off the minute-flat-surfaces 82.

The present invention has been made in consideration of the above circumstances, and has as its object to provide a method for manufacturing a stereoscopic image formation device that is easy in manufacturing and enables a clear stereoscopic image to be provided and such a stereoscopic image formation device.

### Solution to Problem

In order to achieve the above object, a method for manufacturing a stereoscopic image formation device according to a first aspect of the present invention having a first light-control panel and a second light-control panel, each of the first and second light-control panels having on one side thereof a plurality of perpendicular light-reflective surfaces formed perpendicularly and spaced in parallel, the first and second light-control panels overlaid with each other in a manner where the perpendicular light-reflective surfaces of the first light-control panel and the perpendicular light-reflective surfaces of the second light-control panel orthogonally cross when viewed from above, the method for manufacturing a stereoscopic image formation device includes as steps for manufacturing each of the first and second light-control panels:
a first step of manufacturing by injection molding a molded preform made from a transparent first synthetic resin, the molded preform manufactured by forming on one side of a plate body an uneven surface having triangular-cross-sectional grooves disposed in parallel and triangular-cross-sectional ridges disposed in parallel, the triangular-cross-sectional grooves each having an inclined surface and a perpendicular surface, the triangular-cross-sectional ridges each formed by the adjacent triangular-cross-sectional grooves; and
a second step of forming the perpendicular light-reflective surfaces by spraying a metal to the perpendicular surfaces from a tilted direction in a manner where the inclined surfaces become in shadow,
the method for manufacturing a stereoscopic image formation device further includes:
   a resin filling up step of filling up a transparent second synthetic resin into the grooves of the manufactured first and second light-control panels, overlaying the first and second light-control panels in a manner where the uneven surface side of the first light-control panel and the uneven surface side of the second light-control panel face each other with the second synthetic resin in between, and hardening and integrating the first and second light-control panels through the second synthetic resin,
   wherein in the injection molding of the first step, a mold set having thereinside a space corresponding to the shape of the molded preform is used, the first synthetic resin in a molten state is provided into the space of the mold set having been heated and adjusted to a temperature at which the first synthetic resin is flow-able, the mold set is rapidly cooled after the first synthetic resin spreads and reaches tips of parts of the space for forming the ridges of the molded preform each having the triangular-cross-section,
   further wherein the difference between a refractive index η1 that represents the refractive index of the first synthetic resin and a refractive index η2 that represents the refractive index of the second synthetic resin is 0.1 or less.

In order to achieve the above object, a method for manufacturing a stereoscopic image formation device according to a second aspect of the present invention includes:
a first step of manufacturing by injection molding a molded preform made from a transparent first synthetic resin, the molded preform manufactured by forming an uneven surface on each of one side and the other side of a plate body, the uneven surface having triangular-cross-sectional grooves disposed in parallel and triangular-cross-sectional ridges disposed in parallel, the triangular-cross-sectional grooves each having an inclined surface and a perpendicular surface, the triangular-cross-sectional ridges each formed by the adjacent triangular-cross-sectional grooves, the perpendicular surfaces formed on the one side of the plate body and the perpendicular surfaces formed on the other side of the plate body being in an orthogonally-crossed state when viewed from above;
a second step of forming perpendicular light-reflective surfaces on each of the one side and the other side of the molded preform by spraying a metal to the perpendicular surfaces from a tilted direction in a manner where the inclined surfaces become in shadow; and
a resin filling up step of filling up a transparent second synthetic resin into the grooves after the second step, and hardening the second synthetic resin,
wherein in the injection molding of the first step, a mold set having thereinside a space corresponding to the shape of the molded preform is used, the first synthetic resin in a molten state is provided into the space of the mold set having been heated and adjusted to a temperature at which the first synthetic resin is flow-able, the mold set is rapidly cooled after the first synthetic resin spreads and reaches tips of parts of the space for forming the ridges of the molded preform each having the triangular-cross-section,
further wherein the difference between a refractive index η1 that represents the refractive index of the first synthetic resin and a refractive index η2 that represents the refractive index of the second synthetic resin is 0.1 or less.

"A temperature at which the first synthetic resin is flow-able" in here is, when the glass-transition temperature of the first synthetic resin is Tg, e.g, (Tg - 10) °C or more and (Tg + 40) °C or less (preferably, [Tg - 5] °C or more; more preferably, Tg °C or more [much more preferably, beyond Tg °C]; and the upper limit is [Tg + 30] °C) .

Incidentally, the "glass-transition temperature Tg" means a temperature at which the relative positions of the polymer molecules do not change, but the main chains of the molecules start or stop rotation or vibration (i.e. the micro-Brownian motion), that is, the solidification temperature (hardening temperature, fluidization temperature) of the first synthetic resin.

In the method for manufacturing a stereoscopic image formation device according to the first and second aspects of the present invention, it is preferred that the mold set be placed in a vertically-standing state. The molded preform after hardening may be demolded from the mold set while the molded preform is vertically held, may be horizontally demolded, or may be demolded at any angle. The demolding is performed after hardening the first synthetic resin by rapidly cooling the mold set that has been heated and adjusted to a temperature at which the first synthetic resin becomes flow-able (i.e. after the heating and cooling treatment).

In the method for manufacturing a stereoscopic image formation device according to the first and second aspects of the present invention, the top portion of the triangular cross-section of each of the ridges of the molded preform manufactured in the first step may have a circular-arc-shaped cross-section and the circular-arc-shaped cross-section may have a curvature radius of 1 to 20 µm.

In the method for manufacturing a stereoscopic image formation device according to the first and second aspects of the present invention, the top portion of the triangular cross-section of each of the ridges of the molded preform manufactured in the first step may have a minute-flat-surface formed with a width of 10 µm or less.

In the method for manufacturing a stereoscopic image formation device according to the first and second aspects of the present invention, it is preferred that a non-light-transmission treatment for making the top portion of the triangular cross-section of each of the ridges non-light-reflective be performed before the second step, and the non-light-transmission treatment for making the top portion non-light-reflective be further performed to the top portion of the triangular cross-section of each of the ridges at a timing between after the second step and before the resin filling up step. If this non-light-transmission treatment is, e.g., a coloring treatment, the top portion of the triangular cross-section of each of the ridges have a first colored (e.g. black) layer, a metal layer, and a second colored (e.g. black) layer formed in a sequential order.

The term "non-light-reflective" in here means a state of not reflecting the light rays and it includes a state where the light rays are absorbed and a state where the light rays are transmitted (the same is also the case with the following aspects of the present invention). Accordingly, the coating formed by the coloring treatment (i.e. the colored coating) does not necessarily need to have a thickness, e.g., the coloring material (usually, a black one) may be impregnated inside the layer of the metal (unnecessary metal) attached to the top portion of the triangular cross-section of each ridge, and the colored coating fills its role as long as it inhibits the light reflectivity of the reflective coating (reflective surface) formed by the metal.

In order to achieve the above object, a stereoscopic image formation device according to a third aspect of the present invention having a first light-control panel and a second light-control panel, each of the first and second light-control panels including a group of band-shaped light-reflective surfaces disposed in a standing state and spaced in parallel, the first and second light-control panels overlaid with each other in a manner where the group of band-shaped light-reflective surfaces of the first light-control panel and the group of band-shaped light-reflective surfaces of the second light-control panel orthogonally cross when viewed from above, the stereoscopic image formation device includes in each of the first and second light-control panels:
a molded preform made from a transparent first synthetic resin, the molded preform having an uneven surface on the top side of a plate body, the uneven surface formed by triangular-cross-sectional grooves disposed in parallel and triangular-cross-sectional ridges disposed in parallel, the triangular-cross-sectional grooves each having an inclined surface and a perpendicular surface, the triangular-cross-sectional ridges each formed by the adjacent triangular-cross-sectional grooves;
perpendicular light-reflective surfaces formed on the perpendicular surfaces; and
a transparent second synthetic resin filled up into the grooves,
wherein the top portion of the triangular cross-section of each of the ridges of the molded preform has:
   (1) a circular-arc-shaped cross-section and the circular-arc-shaped cross-section has a curvature radius of 1 to 20 µm; or
   (2) a minute-flat-surface formed with a width of 10 µm or less,
further wherein the difference between a refractive index η1 that represents the refractive index of the first synthetic resin and a refractive index η2 that represents the refractive index of the second synthetic resin is 0.1 or less.

It is preferred that the top portion of the triangular cross-section of each of the ridges be a non-light-reflective surface.

In order to achieve the above object, a stereoscopic image formation device according to a fourth aspect of the present invention includes:
a molded preform made from a transparent first synthetic resin, the molded preform having an uneven surface on each of the both sides of a plate body, the uneven surface on one side of the plate body formed by first triangular-cross-sectional grooves disposed in parallel and first triangular-cross-sectional ridges disposed in parallel, the first triangular-cross-sectional grooves each having a perpendicular surface and an inclined surface, the first triangular-cross-sectional ridges each formed by the adjacent first triangular-cross-sectional grooves, the uneven surface on the other side of the plate body formed by second triangular-cross-sectional grooves disposed in parallel and second triangular-cross-sectional ridges disposed in parallel, the second triangular-cross-sectional grooves each having a perpendicular surface and an inclined surface, the second triangular-cross-sectional ridges each formed by the adjacent second triangular-cross-sectional grooves, the first grooves formed on the one side and the second grooves formed on the other side disposed so as to orthogonally cross when viewed from above;
perpendicular light-reflective surfaces formed on the perpendicular surfaces of both of the first grooves on the one side of the molded preform and the second grooves on the other side of the molded preform; and
a transparent second synthetic resin filled up into the first and second grooves,
wherein the top portion of the triangular cross-section of each of the first and second ridges of the molded preform has:
   (1) a circular-arc-shaped cross-section and the circular-arc-shaped cross-section has a curvature radius of 1 to 20 pm; or
   (2) a minute-flat-surface formed with a width of 10 µm or less,
further wherein the difference between a refractive index η1 that represents the refractive index of the first synthetic resin and a refractive index η2 that represents the refractive index of the second synthetic resin is 0.1 or less.

It is preferred that the top portion of the triangular cross-section of each of the first and second ridges be a non-light-reflective surface.

### Advantageous Effects of Invention

In the methods for manufacturing a stereoscopic image formation device according to the present invention, the first synthetic resin in a molten state is provided into the space of the mold set that has been heated and adjusted to a temperature at which the first synthetic resin becomes flow-able, and thus, the flow-ability of the first synthetic resin is maintained. This enables the molten first synthetic resin to spread and reach the tips of the parts of the space for forming the ridges of the molded preform each having the triangular-cross-section and also enables defects on appearance such as flow irregularities (unevenness) and weld lines to be solved.

This results in being able to provide an easily-manufactured stereoscopic image formation device that provides a clear stereoscopic image since the perpendicular surfaces can be formed longer.

Particularly in a case where the non-light-transmission treatment for making the top portion of the triangular cross-section of each ridge non-light-reflective is performed before spraying a metal to the perpendicular surfaces (i.e. before the second step), and the non-light-transmission treatment for making the top portion non-light-reflective is further performed to the top portion of the triangular cross-section of each ridge at a timing between after the metal spraying (i.e. after the second step) and before filling up the second synthetic resin into the grooves (i.e. before the resin filling up step), the adverse effects caused by the metal on the top portion formed when spraying the metal to the perpendicular surfaces can be eliminated. By this, a stereoscopic image formation device that displays a clearer stereoscopic image can be provided.

In a case where the top portion of the triangular cross-section (approximately in a triangular shape; the same will be applied to the below) of each ridge of the molded preform of a stereoscopic image formation device according to the present invention has a circular-arc-shaped cross-section and the curvature radius of the circular-arc-shaped cross-section is 1 to 20 µm, the top portion of the triangular cross-section of each ridge does not have the minute light-reflective flat surface, and thus, excess light rays affecting a stereoscopic image to be displayed are diffusely reflected, thereby a clear stereoscopic image can be provided.

In a case where the minute-flat-surface is formed on the top portion of the triangular cross-section of each ridge of the molded preform and the width of the minute-flat-surface is 10 µm or less, the light rays adversely affecting a stereoscopic image to be displayed are reduced, thereby a clear stereoscopic image can be provided.

Particularly in a case where the top portion of the triangular cross-section of each ridge is made into the non-light-reflective surface, adverse effects caused by the metal on the top portion formed when spraying the metal to the perpendicular surfaces can be eliminated.

By the above, a stereoscopic image formation device that displays a clearer stereoscopic image can be provided. Brief Description of Drawings

Figs. 1(A) and 1(B) are a front cross-sectional view and a side cross-sectional view, respectively, of a stereoscopic image formation device manufactured by the method for manufacturing a stereoscopic image formation device according to a first embodiment of the present invention.
Fig. 2(A) is an explanatory figure illustrating the metal spraying to the perpendicular surfaces of the molded preform according to a first modification.
Fig. 2(B) is an explanatory figure illustrating a state where the coloring treatment has been performed before and after spraying the metal to the perpendicular surfaces of the same molded preform.
Fig. 3(A) is a partially-enlarged side view illustrating the ridges and grooves of the molded preform manufactured in the first step of the method for manufacturing a stereoscopic image formation device according to the first embodiment of the present invention.
Fig. 3(B) is a partially-enlarged side view illustrating the ridges and grooves of the molded preform according to a second modification.
Fig. 3(C) is a partially-enlarged side view illustrating the ridges and grooves of the molded preform according to a third modification.
Figs. 4(A) to 4(E) are explanatory figures illustrating the same method for manufacturing a stereoscopic image formation device.
Fig. 5(A) is an explanatory figure illustrating an exfoliation treatment of the unnecessary metal.
Fig. 5(B) is an explanatory figure illustrating a polishing treatment of the unnecessary metal.
Figs. 6(A) to 6(C) are partially-enlarged side views illustrating the minute-flat-surfaces (i.e. the top portions of the ridges) provided with light absorbing coatings formed.
Fig. 7 is an explanatory figure illustrating the first step of the method for manufacturing a stereoscopic image formation device according to the first embodiment of the present invention
Figs. 8(A) and 8(B) are a front cross-sectional view and a side cross-sectional view, respectively, of a stereoscopic image formation device manufactured by the method for manufacturing a stereoscopic image formation device according to a second embodiment of the present invention.
Figs. 9(A) to 9(E) are explanatory figures illustrating the same method for manufacturing a stereoscopic image formation device.
Fig. 10 is an explanatory figure illustrating a method for manufacturing a stereoscopic image formation device according to a conventional example.
Fig. 11 is an explanatory figure illustrating the same method for manufacturing a stereoscopic image formation device.
Figs. 12(A) and 12(B) are a front cross-sectional view and a side cross-sectional view, respectively, of a stereoscopic image formation device manufactured by using the same method for manufacturing a stereoscopic image formation device.

### Description of Embodiments

Embodiments of the present invention will be described next with reference to the accompanying drawings to provide an understanding of the present invention.

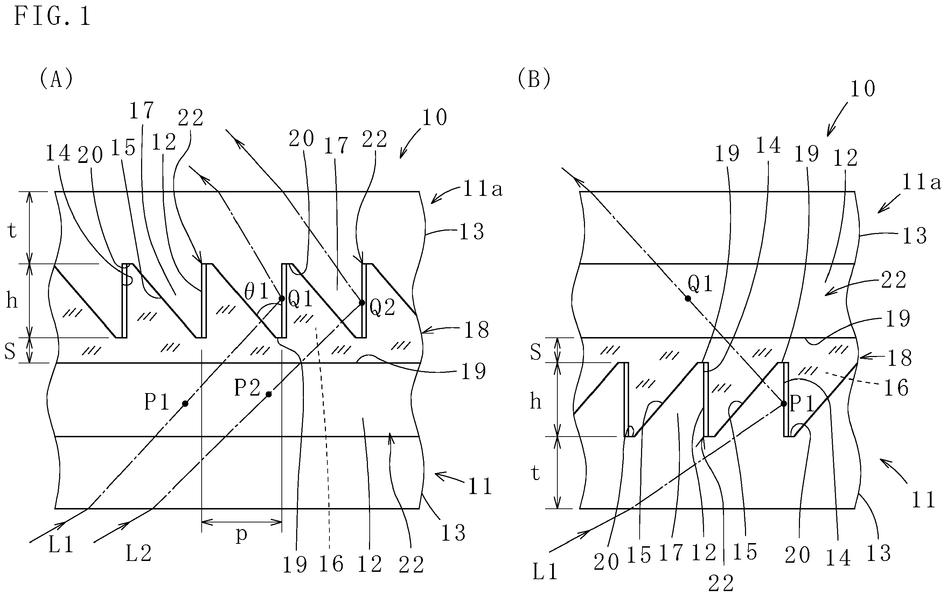

A stereoscopic image formation device 10, which is manufactured by a method for manufacturing a stereoscopic image formation device (while using the method for manufacturing the light-control panels) according to the first embodiment of the present invention, will be explained first while referencing to Figs. 1(A) and 1(B).

The stereoscopic image formation device 10 has a pair of a first and second light-control panels (parallel light-reflective panels) 11 and 11a. In Figs. 1(A) and 1(B), the first light-control panel 11 is disposed on the lower side and the second light-control panel 11a is disposed on the upper side. Since the first and second light-control panels 11 and 11a have an identical composition, the composing elements are given common reference signs.

The first light-control panel 11 (also the second light-control panel 11a) is provided with a group of band-shaped light-reflective surfaces, which includes a large number of band-shaped perpendicular light-reflective surfaces 12 (mirrors) that are spaced in parallel in a (perpendicularly) standing state, formed on a unilateral side (top side, one side) (on the upper side of the first light-control panel 11, whereas on the lower side of the second light-control panel 11a) thereof.

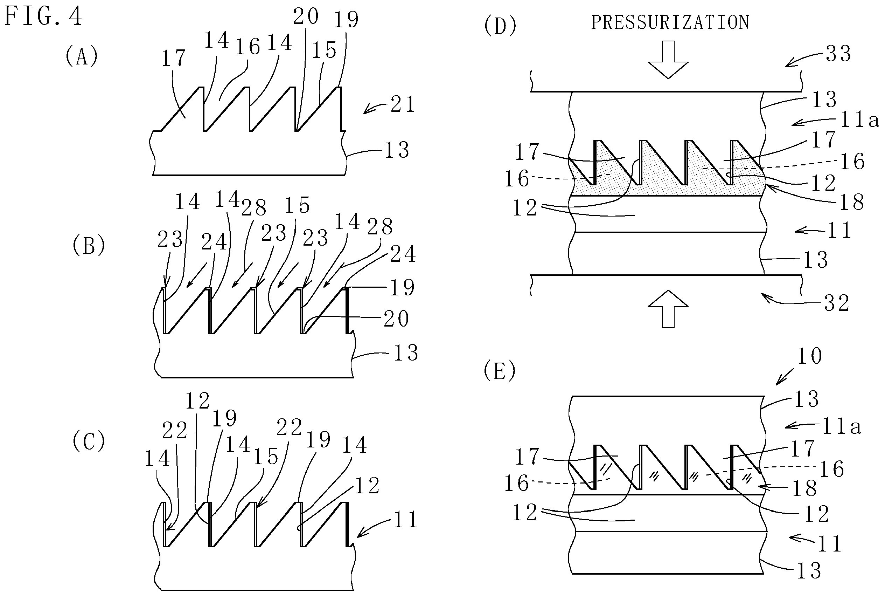

Specifically, the first and second light-control panels 11 and 11a each have a molded preform 21 made from a transparent first synthetic resin, the molded preform 21 is provided with triangular-cross-sectional grooves 16 and triangular-cross-sectional ridges 17 on the top side (one side) of a plate body (transparent plate body) 13, each groove 16 has a perpendicular surface 14 and an inclined surface 15, and each ridge 17 is formed by the adjacent grooves 16 (see Figs. 4[A] to 4[D]). The first and second light-control panels 11 and 11a also each have perpendicular light-reflective surfaces 12 formed on the perpendicular surfaces 14 of the grooves 16, and the perpendicular light-reflective surfaces 12 reflect light rays having entered the ridges 17. The grooves 16 and the ridges 17 of each of the first and second light-control panels 11 and 11a are both provided in a large number and in parallel with a constant pitch, and the grooves 16 and the ridges 17 form an uneven surface. It is preferred that the perpendicular light-reflective surfaces 12 be formed only on the perpendicular surfaces 14.

The first and second light-control panels 11 and 11a are joined and integrated in a manner where the grooves 16 (i.e. the uneven surface side) of the two panels 11 and 11a face each other and the perpendicular light-reflective surfaces 12 of the group of band-shaped light-reflective surfaces of the first panel 11 and those of the second panel 11a are disposed so as to orthogonally cross (including a state of crossing at an angle within a range of, e.g., 88 to 92 degrees) when viewed from above. In between the first and second light-control panels facing each other, an adhesive 18 made of a transparent second synthetic resin is placed, and the inside of each groove 16 is stuffed (filled up) with the adhesive 18.

Although Figs. 1(A) and 1(B) show a state where the upper surfaces of the ridges 17 of the first light-control panel 11 and the lower surfaces of the ridges 17 of the second light-control panel 11a are disposed closely to each other having a gap S (e.g. beyond 0 mm and approximately 5 mm or less) therebetween, they may be disposed in immediate contact with each other (i.e. with no gap: 0 mm). The gap S is also filled up with the adhesive 18 (i.e. the gap S is the layer thickness of the adhesive 18).

The first synthetic resin (transparent resin) forming the shape of the first and second light-control panels 11 and 11a (i.e. forming the molded preforms 21) and the second synthetic resin (transparent resin) to become the adhesive 18 that is to be filled up into the grooves 16 are preferably a same kind of resin having a high transparency. However, they may be different kinds of transparent resins having a high transparency.

As the first synthetic resin, e.g., a thermoplastic resin ZEONEX (ZEONEX: a registered trademark, glass-transition temperature: 120 to 160 °C, refractive index η1:1.535, cyclo olefin polymer) that has a melting point higher than the second synthetic resin may be used. As the second synthetic resin, e.g., ZEONOR (ZEONOR: a registered trademark, glass-transition temperature: 100 to 102 °C, refractive index η2:1.53, cyclo olefin polymer) may be used.

In a case where a same kind of thermoplastic resin is used for the first and second synthetic resins, since the melting point is the same, the second synthetic resin that is in a molten state is poured in between the first light-control panel 11 and the second light-control panel 11a.

At this point, there is a possibility that the first synthetic resin forming the first and second light-control panels 11 and 11a partially softens (melts) at the positions where the first and second light-control panels 11 and 11a come into contact with the molten second synthetic resin. However, in this case the first and second synthetic resins mix together at the boundaries, and this enables, e.g., the refractive indexes of the first and second synthetic resins to be averaged, and enhances the binding force between the first and second synthetic resins.

In a case where different kinds of transparent resins are used for the first and second synthetic resins, it is preferred that their refractive indexes equal or approximate each other. Specifically, the second synthetic resin that has a refractive index η2 being equal or nearly equal to the refractive index η1 of the first synthetic resin (e.g. within a range of ± 10%; i.e. η2 is within a range of [0.9 to 1.1] × η1; preferably, the lower limit is 0.95 × η1 and the upper limit is 1.05 × η1) can be used. It is recommended that the difference between the refractive indexes η1 and η2 be 0.1 or less (preferably, 0.05 or less), moreover 0.01 or less (preferably, 0.009 or less; more preferably, 0.005 or less). Although the refractive indexes η1 and η2 are preferred to be the same, when using different kinds of transparent resins for the first and second synthetic resins, the difference between their refractive indexes η1 and η2 is preferred to be closer to zero.

As a method for matching the refractive index of the second synthetic resin with the refractive index of the first synthetic resin that is for forming the molded preform 21, e.g., there is a method of adjusting the refractive index by mixing two or more different resins (the refractive index of the first synthetic resin also can be adjusted by the same way). In this case, it is preferred that the values of the refractive indexes of the first and second synthetic resins match down to the three digits (i.e. down to two decimal places) from the top.

Note that "the refractive indexes" of the first and second synthetic resins in here mean the refractive indexes after hardening and not in a molten state.

The adhesive 18 made of the second synthetic resin is preferred to be any one of an ultraviolet-curable type resin (e.g. urethane [meth]acrylate, [meth]acrylate having a polyisoprene skeleton, [meth]acrylate having a polybutadiene skeleton, and [meth]acrylate such as [meth]acrylate monomer), a thermosetting type resin, a two-component-curable type resin, and a room-temperature-curable type resin. Also, a thermoplastic resin, such as polymethyl methacrylate (PMMA: an acrylic resin), amorphous fluororesin, cyclo olefin polymer (COP), polycarbonate for optical use, fluorene-based polyester, and polyether sulfone may be used (the same is also the case with the first synthetic resin).

Regarding the first and second light-control panels 11 and 11a, when the thickness of the plate body 13 is t and the height of the perpendicular light-reflective surfaces 12 (the ridges 17) is h, it is preferred that, e.g., t/h be within a range of 0.5 to 10. Although it is suitable for practical use that (t + h) is within a range of 0.5 to 5 mm and h is within a range of, e.g., 0.03 to 3 mm, the present invention is not limited by these values.

Although it is preferred that an angle θ1 between the perpendicular light-reflective surface 12 (perpendicular surface 14) and the inclined surface 15 be within a range of 15 to 60 degrees (more preferably, the upper limit be 45 degrees), the angle θ1 can be changed depending on the thickness t and the height h.

Also it is preferred that the aspect ratio (h/p), which is the ratio of the height h of the perpendicular light-reflective surfaces 12 to the pitch p of the perpendicular light-reflective surfaces 12 (i.e. the width of each groove 16), be within a range of 0.8 to 5 (more preferably, the lower limit be 2 and the upper limit be 3.5). By this, the perpendicular light-reflective surfaces 12 with a higher height can be provided.

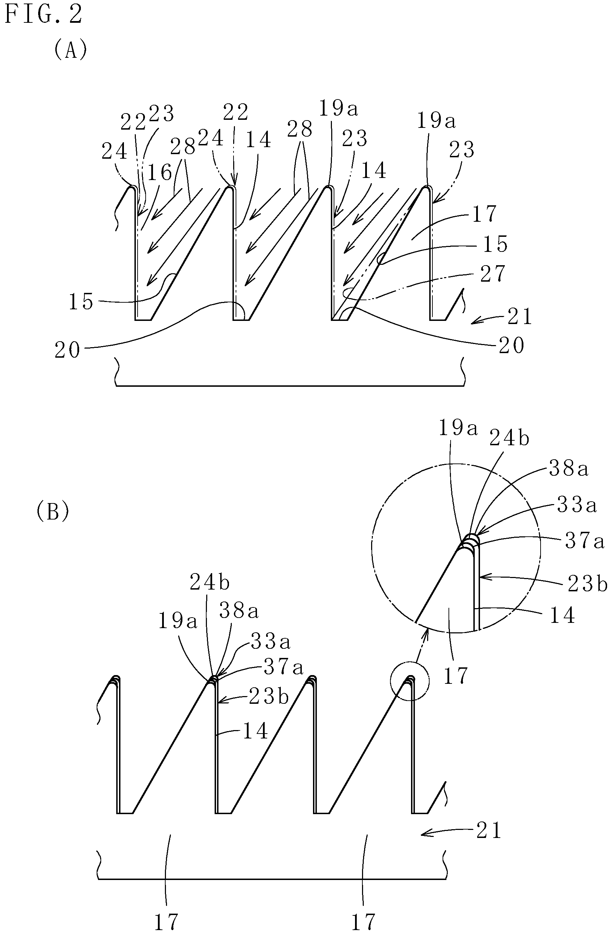

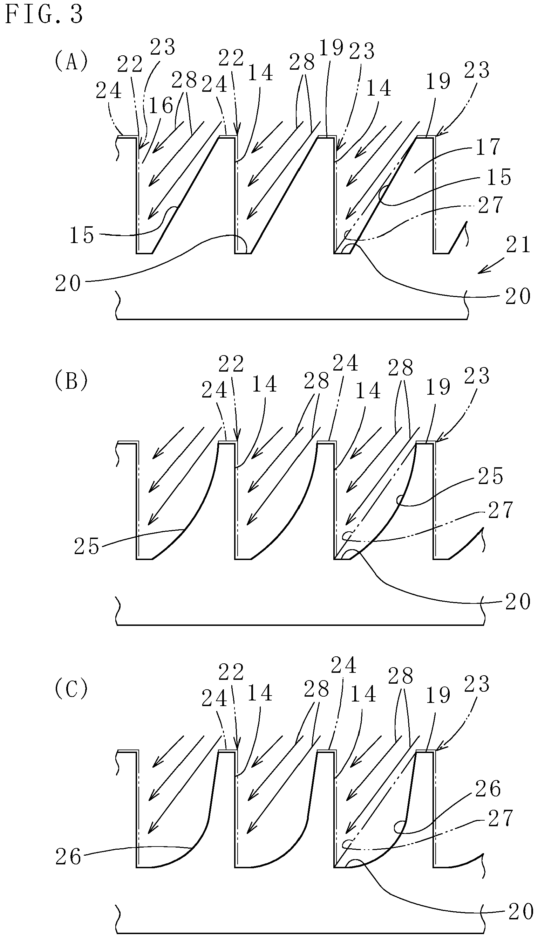

At the corner (i.e. the edge, the top portion) forming an acute angle of the triangular cross-section of each ridge 17, there provided is a curved surface (arc-like portion) 19a having a circular-arc-shaped cross-section as shown in Figs. 2(A) and 2(B), or a first minute-flat-surface (i.e. a ridge top) 19 as shown in Figs. 1(A), 1(B), and 3(A), and at the corner (i.e. at the bottom portion) forming an acute angle of the triangular cross-section of each groove 16, there provided is a second minute-flat-surface 20 as shown in Figs. 1(A), 1(B), 2(A), 2(B), and 3(A).

The maximum width of each curved surface 19a shown in Figs. 2(A) and 2(B) (i.e. the distance between the end point of the perpendicular surface 14 continuously connecting to the curved surface 19a and the end point of the inclined surface 15 continuously connecting to the curved surface 19a when viewing the cross-section) is 10 µm or less; preferably, 5 µm or less; more preferably, 3 µm or less. The curvature radius of the curved surface 19a is 1 to 20 µm (preferably, the upper limit is 10 µm) . Note that the curvature radius of the curved surface 19a is subject to influence by the surface tension of the first synthetic resin in a molten state.

Since the width of each curved surface 19a is narrow as described above, the perpendicular surfaces 14 can be formed higher in height. Also, since the curved surface 19a has a circular-arc-shaped cross-section, even if a metal reflective surface is formed on the surface of the curved surface 19a, what is to be formed is not a minute light-reflective flat surface but a minute light-reflective curved surface, which irregularly reflects or scatters the light rays. Therefore, it becomes easier to provide a clear stereoscopic image.

It is preferred that each first minute-flat-surface 19 (an example of the minute-flat-surface) shown in Fig. 3(A) have a width w1 that is within a range of 0.01 to 0.2 (more preferably, the upper limit be 0.1; much more preferably, the upper limit be 0.05) times the pitch p with which the perpendicular light-reflective surfaces 12 are provided, and besides, the width w1 is preferred to be 10 µm or less; more preferably, 5 µm or less; much more preferably, 3 µm or less. Also, it is preferred that the second minute-flat-surface 20 have a width w2 that is within a range of 0.01 to 0.3 times the pitch p (more preferably, the lower limit be 0.02 times and the upper limit be 0.2 times) and that the correlation: w2 > w1 be true.

The reason for providing the first minute-flat-surface 19 to the corner of each ridge 17 as described above is because it is impossible to produce a mold set that forms the ridges each having an acute angle formed by the perpendicular surface and the inclined surface crossing each other. Also, by providing the second minute-flat-surfaces 20, flaws in the products become harder to occur, thereby further enhancing the accuracy of the products; however, the second minute-flat-surfaces 20 may not necessarily be provided (i.e. each corner may have the curved surface having a circular-arc-shaped cross-section, or may have an acute angle formed by the perpendicular surface and the inclined surface crossing each other).

The perpendicular light-reflective surfaces 12 are formed by performing a mirror finish treatment selectively to the perpendicular surfaces 14 of the grooves 16 of the molded preform 21 made from the first synthetic resin as shown in Figs. 2(A) and 3(A) (see also Fig. 4[B]).

The mirror finish treatment is done by spraying (irradiating with) a metal to the perpendicular surfaces 14 from a tilted direction (along the inclined surfaces 15) in a manner where the inclined surfaces 15 become in shadow.

As the metal spraying, there are sputtering, metal deposition, spraying of micro metal particles, ion beam irradiation, or else. For the mirror finish treatment, a metal with a high reflectivity (e.g. Ag [silver], Al [aluminum], Ni [nickel], Ti [titanium], Cr [chromium], or else) is used, and the surface of a metal coating 22 (i.e. the metal reflective surface) formed on each perpendicular surface 14 becomes one of the perpendicular light-reflective surfaces 12.

This makes it possible to form the metal reflective surfaces on the perpendicular surfaces 14 of the grooves 16 while preventing to a possibly minimum extent the metal reflective surfaces from being formed on the inclined surfaces 15 of the grooves 16.

However, performing the mirror finish treatment to the perpendicular surfaces 14 of the grooves 16 along the aforementioned method leads to a situation shown in Figs. 2(A) and 3(A) in which the metal coatings are formed also on the curved surfaces 19a or the first minute-flat-surfaces 19, thereby the metal reflective surfaces 23 are formed throughout from the perpendicular surfaces 14 to the curved surfaces 19a or to the first minute-flat-surfaces 19.

If using a stereoscopic image formation device configured by using these light-control panels with the metal coatings left on the curved surfaces 19a or the first minute-flat-surfaces 19, adverse effects to the stereoscopic image to be formed can be reduced only when the width of each curved surface 19a or each first minute-flat-surface 19 is narrow (regarding the first minute-flat-surfaces, only in a case where the width is 10 µm or less); however, as the width of each curved surface 19a or each first minute-flat-surface 19 gets wider (regarding the first minute-flat-surfaces, when the width is beyond 10 µm), it includes the risk of not providing a clear stereoscopic image as mentioned above (see Figs. 10, 12[A], and 12[B]).

In light of this, it is preferred to prevent the curved surfaces 19a or the first minute-flat-surfaces 19 from reflecting the light rays by performing a coloring treatment (as an example of the non-light-transmission treatment) for making the curved surfaces 19a or the first minute-flat-surfaces 19 into non-light-reflective surfaces as explained below.

The curved surfaces 19a may be made into light absorbing surfaces by forming a light absorbing coating (a black-colored coating) 33a, which prevents the curved surface 19a from reflecting the light rays, on each curved surface 19a as shown in Fig. 2(B).

Specifically, after forming in advance a first colored coating 37a on the surface of each curved surface 19a (i.e. after performing the coloring treatment for making the curved surfaces 19a non-light-reflective), a metal reflective surface 23b is formed throughout from the perpendicular surface 14 to the surface of the first colored coating 37a by performing the metal spraying mentioned above, and a second colored coating 38a is formed in a manner where the metal reflective surface 23b formed on the surface of first colored coating 37a, i.e. unnecessary metal 24b, is covered over by the second colored coating 38a (i.e. the coloring treatment for making the surfaces of the unnecessary metals 24b non-light-reflective, is performed). Note that the unnecessary metals 24b in here are not something intentionally formed so as to cover the first colored coatings 37a, but are something unavoidably formed.

The light absorbing coating 33a is composed of the first colored coating 37a and the second colored coating 38a, and consequently, the non-light-reflective surface is formed on the top portion of the triangular cross-section of each ridge 17. This makes it possible to prevent the curved surfaces 19a from reflecting the light rays on the top side or the bottom side of the curved surfaces 19a.

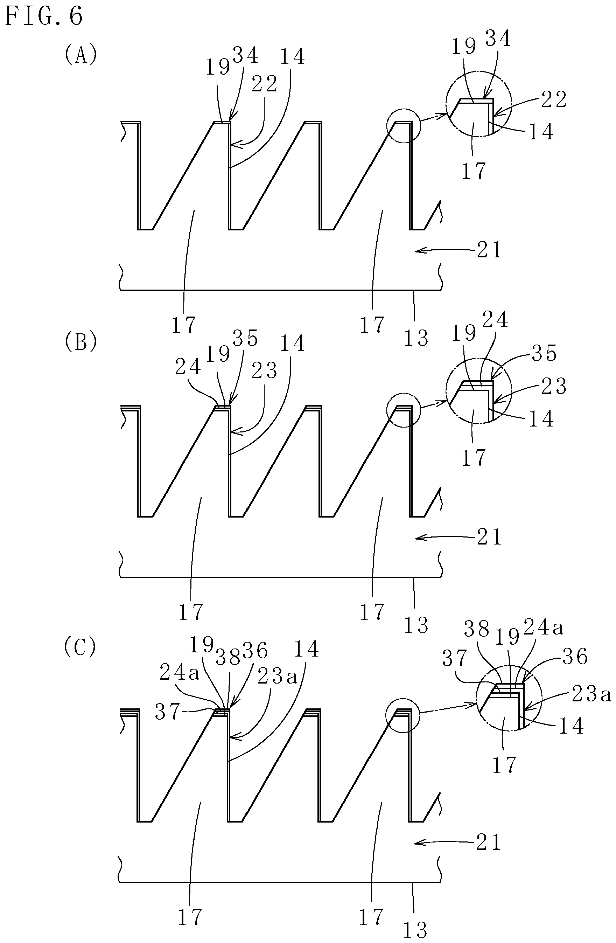

The first minute-flat-surfaces 19 may be made into the light absorbing surface also by forming one of light absorbing coatings (black-colored coatings) 34 to 36, each of which prevents the first minute-flat-surfaces 19 from reflecting the light rays, on each first minute-flat-surface 19 as shown in Figs. 6(A) to 6(C).

In Fig. 6(A), the light absorbing coating 34 that is the first colored coating is formed on the top (the surface) of each first minute-flat-surface 19 from which the unnecessary metal 24 has been removed (i.e. a treatment of coloring the first minute-flat-surfaces). This makes it possible to prevent the minute-flat-surfaces 19 from reflecting the light rays on the top side or the bottom side of the minute-flat-surfaces 19.

In Fig. 6(B), the light absorbing coating 35 that is the first colored coating is formed on each first minute-flat-surface 19 without removing the unnecessary metal 24 attached to the first minute-flat-surface 19, in a manner where the light absorbing coating 35 covers the top (the surface) of the unnecessary metal 24 (i.e. the unnecessary metals 24 are colored from above).

In Fig. 6(C), after forming in advance a first colored coating 37 on the surface of each first minute-flat-surface 19, a metal reflective surface 23a is formed throughout from the perpendicular surface 14 to the surface of the first colored coating 37 by performing the aforementioned metal spraying, and a second colored coatings 38 is formed such that the surface of an unavoidably formed unnecessary metal 24a is covered over by the second colored coating 38. The light absorbing coating 36 is composed of the first colored coating 37 and the second colored coating 38, and prevents the light rays from reflecting off the top side or the bottom side of the minute-flat-surface 19.

By this, the light rays that, e.g., enters the first minute-flat-surface 19 from the inside of the ridge 17 are absorbed by the first colored coating 37, and the light reflection from the unnecessary metal 24a is prevented by the second colored coating 38. Accordingly, it is preferred that the surface of the unnecessary metal 24a be covered by using, as the second colored coating 38, a coloring coating with a high shielding ability (the same is also the case with the first colored coating 37a and the second colored coating 38a composing the light absorbing coating 33a formed on each curved surface 19a).

Although the color of the first and second colored coatings (hereinafter, also simply referred to as "the colored coatings") is not particularly limited as long as the color absorbs the light rays, black is preferred. As a black ink for forming the colored coatings, a pigment type ink having a high shielding ability, a matte type ink having a high light absorbing ability, or else (e.g. an ink including the carbon black) can be used. The thickness of each colored coating may be, e.g., 0 µm (in a case where the coloring material is impregnated into the unnecessary metal), and also it is acceptable when the thickness is approximately from a few micrometers to several tens of micrometers.

As a method for forming the colored coatings on the curved surfaces 19a, the first minute-flat-surfaces, or the unnecessary metals (hereinafter, referred to as "the first minute-flat-surfaces or else"), the conventionally-known printing technology such as the screen printing, the ink-jet printing, and so on, can be used.

The screen printing is a method for forming the colored coatings on the first minute-flat-surfaces or else, in which a light sensitive emulsion is applied on a mesh screen tightly stretched with a frame, a mask with open areas corresponding to the areas of the first minute-flat-surfaces or else is disposed on the molded preform to expose the first minute-flat-surfaces or else, and after that, ink disposed on the mask is pressed with a squeegee against the first minute-flat-surfaces or else. Although it is preferred to use a mesh screen made of silk, a mesh screen made of a synthetic fiber such as the polyester or a mesh screen made of a metal fiber may be used.

The ink-jet printing is a method for forming the colored coatings on the first minute-flat-surfaces or else, in which pressure or heat is applied to ink to make the ink into fine particles, and the fine particles of the ink are sprayed to the first minute-flat-surfaces or else.

Incidentally, the non-light-reflection treatment can be omitted when the width of each curved surface 19a or each minute-flat-surface 19 is narrow. Also, it is easy to make the width of each second minute-flat-surface 20, which is formed at the bottom of one of the grooves, approach to zero (i.e. the second minute-flat-surfaces 20 can be easily eliminated); however, the second minute-flat-surfaces 20 help to clearly distinguish the perpendicular surfaces 14 from the inclined surfaces 15.

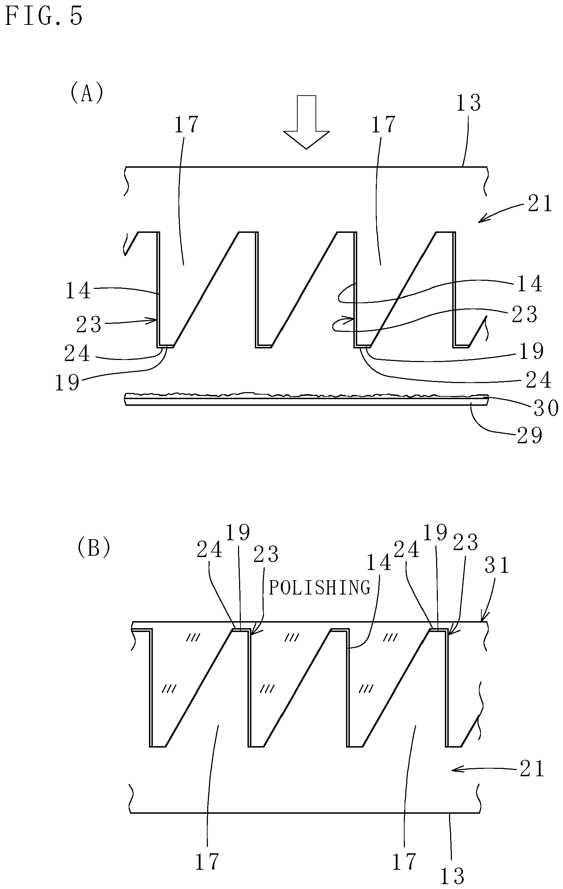

Alternatively, a light-transmission treatment for making the first minute-flat-surfaces 19 into transparent light-transmissible surfaces (non-light-reflective surfaces) may be performed, in which the metal coatings attached to the first minute-flat-surfaces 19 due to the metal spraying shown in Figs. 3(A) and 4(B), namely the unnecessary metals 24, are removed by any one of the following treatments that will be explained later: an exfoliation treatment shown in Fig. 5(A), a polishing treatment shown in Fig. 5(B), and a dissolution treatment. Additionally, there is another method that may be used, in which a resin that can be peeled off with exposing to the ultraviolet rays is applied only on the first minute-flat-surfaces 19, the metal spraying is performed, and after that, only the unnecessary metals 24 are removed from the first minute-flat-surfaces 19.

The inclined surfaces 15, which are a part of the transparent molded preform 21 and each have an even flat surface with an excellent light transmission, have no need to process. However, a satin finish treatment (an example of surface treatments for demolding) that forms a plurality of convexes and concaves (dimples) may be performed to the inclined surfaces 15 in order to decrease the demolding resistance when manufacturing the molded preform 21 as explained below. The inclined surfaces 15 each have a flat surface as shown in Fig. 3(A); however, as shown in Figs. 3(B) and 3(C), each of the inclined surfaces 25 and 26 may be formed of a concave surface depressed from a hypothetical flat surface 27 that connects from the groove side edge (the upper edge) of the first minute-flat-surface 19 located on the upper side to the perpendicular surface side edge (the lower edge) of the second minute-flat-surface 20 located on the lower side. Specific explanation is as follows.

Each inclined surface 25 shown in Fig. 3(B) is formed of a curved surface having an embowed cross-section or a circular-arc-shaped cross-section.

Each inclined surface 26 shown in Fig. 3(C) is formed of a flat surface formed on the upper side and a curved surface (having an embowed cross-section or a circular-arc-shaped cross-section), which continuously connecting to the upper flat surface, formed on the lower side.

Note that each inclined surface is not limited by the aforementioned shapes as long as each inclined surface is a concave surface. Thus, it may be formed of, e.g., a plurality of, two or more of, flat surfaces. In this case, each inclined surface may be configured such that the angle formed by the adjacent flat surfaces becomes less than 180 degrees (e.g. 120 to 175 degrees; preferably, the lower limit is 150 degrees and the upper limit is 170 degrees).

By this, it becomes possible to form the metal reflective surfaces only on the perpendicular surfaces 14 of the grooves 16, while further preventing the metal reflective surfaces from being formed on the inclined surfaces 15, by spraying the metal to the perpendicular surfaces 14, at an angle beyond the cross-sectional inclination angle θ1 of the inclined flat surfaces 15 (e.g. θ1 + [1 to 10 degrees]), along the inclined surfaces 15 as shown in Fig. 3(A) (the same is also the case with Figs. 3[B] and 3[C]).

Therefore, how deep each inclined surface 15 is depressed from the hypothetical flat surface 27, can be variously changed depending on conditions of the metal spraying.

By this, in Figs. 1(A) and 1(B), the light rays L1 and L2, which are from an object and obliquely enter the stereoscopic image formation device 10 from the lower left side, reflect off the points P1 and P2, respectively, of the perpendicular light-reflective surfaces 12 placed on the lower side, further reflect off the points Q1 and Q2, respectively, of the perpendicular light-reflective surfaces 12 placed on the upper side, and a stereoscopic image is formed on the upper side of the stereoscopic image formation device 10.

Since the stereoscopic image formation device 10 is configured by overlaying the first and second light-control panels 11 and 11a in a manner where the grooves 16 of the first light-control panel and the grooves 16 of the second light-control panel face each other as described above, the perpendicular light-reflective surfaces 12 of the first light-control panel 11 and the perpendicular light-reflective surfaces 12 of the second light-control panel 11a become close to each other, thereby improving the level of the light focusing of the light rays from the object, and a clearer image is provided.

Although the bottom side (the left side in Figs. 1[A] and 1[B]) of the metal coatings 22 formed by the mirror finish treatment on the perpendicular surfaces 14 are used as the perpendicular light-reflective surfaces 12 of the first and second light-control panels 11 and 11a in this embodiment, the top side (the right side in Figs. 1[A] and 1[B]) of the metal coatings 22 may be used as the perpendicular light-reflective surfaces.

In the behavior of the stereoscopic image formation device 10, when the light rays enter the plate body 13 from in the air or when the light rays exit into the air from the plate body 13, the photorefractive phenomena, or the total reflection phenomena in some cases, can occur. So, the stereoscopic image formation device 10 needs to be used taking these possibilities into consideration (the same is also the case with the following embodiments). Incidentally, the inclined surfaces 15 serve as light-transmissible surfaces as they are, and the first minute-flat-surfaces 19 (or the curved surfaces 19a) serve as light-transmissible surfaces or light-absorbing surfaces.

A method for manufacturing a stereoscopic image formation device 10 according to the first embodiment of the present invention will be explained while referencing Figs. 4(A) to 4(E) from here. Seeing that the first and second light-control panels 11 and 11a are manufactured by an identical manufacturing method, the manufacturing method for the first light-control panel 11 will be mainly explained. Figs. 4(A) to 4(C) illustrate the manufacturing method for the first light-control panel 11.

### (The first step)

The molded preform 21 made from the transparent first synthetic resin is manufactured by injection molding. As shown in Fig. 4(A), the molded preform 21 has the plate body 13, on the top side (one side) of which an uneven surface is formed. On the uneven surface, the triangular-cross-sectional grooves 16 each having one of the perpendicular surfaces 14 and one of the inclined surfaces 15 are disposed in parallel and the triangular-cross-sectional ridges 17 each formed by the adjacent grooves 16 are disposed in parallel. On the top portion of each ridge 17 the first minute-flat-surface 19 is formed, and on the bottom portion of each groove 16 the second minute-flat-surface 20 is formed. As can be seen from the above, the plate body 13 and the ridges 17 that compose the molded preform 21 are not separately manufactured but manufactured in an integrated manner.

It is preferred to use any one of an ultraviolet-curable type resin, a thermosetting type resin, a two-component-curable type resin, and a room-temperature-curable type resin as the first synthetic resin for forming the molded preform 21. Also, a thermoplastic resin, such as polymethyl methacrylate, amorphous fluororesin, cyclo olefin polymer, polycarbonate for optical use, fluororene-based polyester, and polyether sulfone, may be used.

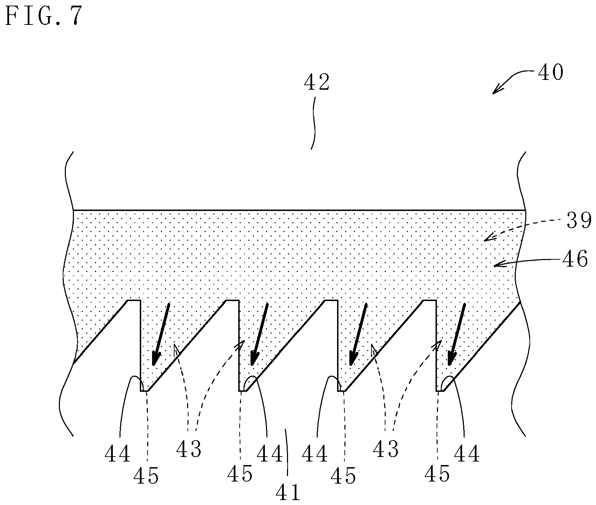

As shown in Fig. 7, for injection molding a mold set 40 made from a metal (including an alloy), which has thereinside a space 39 corresponding to the shape of the molded preform 21, is used. The mold set 40 includes a pair of molds 41 and 42. One of the molds (hereinafter, also referred to as "the lower mold") 41 has a surface shape that corresponds to the surface shape of the triangular-cross-sectional grooves 16 and the triangular-cross-sectional ridges 17 on the top side (the one side) of the plate body 13, whereas the other one of the molds (hereinafter, also referred to as "the upper mold") 42 has a surface shape that corresponds to the surface shape (a flat surface) on the bottom side (the other side) of the plate body 13. When injection molding, usually, the first synthetic resin in a molten state is provided from the upper mold side into the space of the mold set with a preset pressure applied (i.e. the first synthetic resin is pushed into the space), and after letting the first synthetic resin inside the space harden (solidify, the same is also the case hereinafter), the pair of the lower and the upper molds are separated to take out the molded preform that is the molded product. Although the mold set 40 is disposed horizontally in Fig. 7, the mold set 40 can be disposed vertically, and in this case, a large-sized stereoscopic image formation device with a superior flatness can be provided (the same is also the case with the following embodiments). Incidentally, the frames for holding the mold set are not shown in the figure.

The lower mold 41 is provided with triangular-cross-sectional groove portions 43 for forming the triangular-cross-sectional ridges 17 (i.e. the groove portions 43 are a part of the space 39, and for forming the ridges 17 such that the ridges each have the triangular cross-section). Each groove portion 43 is provided with a bottom surface 44, and the bottom surfaces 44 are for forming, e.g., the first minute-flat-surfaces 19. So, the inner width of each bottom surface 44 is formed to be extremely narrow (e.g. to be approximately 3 µm or more and 9 µm or less) .

For this reason, if using the mold set 40 that is unheated, the flow-ability of the molten first synthetic resin deteriorates, and it is impossible to make the molten first synthetic resin spread and reach (i.e. fill up to) the bottom surfaces 44 of the groove portions 43, namely, tips 45 (here, the lower tips: the narrow parts each gradually getting narrower) of the space 39 (see Fig. 11).

In light of this, a molten first synthetic resin 46 is provided (pushed, filled up) into the space 39 of the mold set 40 that is heated and adjusted to a temperature at which the first synthetic resin is flow-able.

The temperature at which the first synthetic resin 46 is flow-able may be, e.g., (Tg - 10) °C or more when the glass-transition temperature of the first synthetic resin 46 is Tg. Preferably, it may be (Tg - 5) °C or more (more preferably, Tg °C or more; much more preferably, beyond Tg °C). This secures the flow-ability of the molten first synthetic resin 46.

Whereas, the upper limit of the temperature is not particularly limited since it is acceptable as long as the flow-ability of the molten first synthetic resin 46 is secured. However, the mold set 40 is rapidly cooled after the molten first synthetic resin 46 is provided into the space 39 of the mold set 40 in order to harden the first synthetic resin 46 (i.e. the heating and cooling treatment). So, given the productivity and the economic efficiency, the upper limit would be, e.g., (Tg + 40) °C, and preferably, (Tg + 30) °C.

By the above, the flow-ability of the molten first synthetic resin 46 is maintained even at the point when the first synthetic resin 46 is provided into the space 39 of the mold set 40.

Thus, the injecting pressure is delivered up to the end of the flow, and it is possible to make the molten first synthetic resin 46 spread and reach the tips 45 of the parts of the space 39 for forming the ridges 17 of the molded preform 21 each having the triangular cross-section, and also possible to make the molten first synthetic resin 46 closely attach to the bottom surface 44 of each groove portion 43. Besides, it is possible to solve the defects on appearance such as flow irregularities and weld lines of the first synthetic resin.

After providing the molten first synthetic resin 46 into the space 39 of the mold set 40 as described above, the mold set 40 is rapidly cooled (i.e. the temperature of the mold set 40 is dropped to a temperature lower than the glass-transition temperature Tg) to harden the first synthetic resin 46, and the one and the other of the pair of the molds 41 and 42 are separated to take out the molded preform 21 from the inside of the mold set 40.

As a method for rapidly cooling the mold set after heating it, e.g., there are methods using any one, or two or more of hot water, vapor, oil, electromagnetic induction, and an electric heater.

The dimensions of the molded preform 21 are almost the same as those of each of the first and second light-control panels 11 and 11a, and as described above, the grooves 16 are each in a tapering state that gets wider as it goes outer, and moreover, the satin finish treatment is performed to the inclined surfaces 15; therefore, the molded preform 21 has an excellent demoldability, and it is easy to form the perpendicular surfaces 14 to be longer. As a method for providing the satin finish treatment to the inclined surfaces 15, there is a method of forming a plurality of convexes and concaves on the surfaces, with which the inclined surfaces 15 are supposed to come into contact, of the molding frame (i.e. the mold 41 of the mold set 40) for manufacturing the molded preform 21.

Further, it is preferred that an annealing treatment be performed to the molded preform 21 for eliminating the residual stress having occurred when molding. This annealing treatment is performed by, e.g., putting the molded preform 21 into an electric furnace, a hot-air drier, or a hot water tank (a heated solvent) for a predetermined length of time (the same is also the case with the following embodiments).

### (The second step)

As shown in Figs. 3(A) and 4(B), e.g., sputtering is performed to the perpendicular surfaces 14. By this, the metal reflective surfaces 23 are formed throughout from on the perpendicular surfaces 14 to on the first minute-flat-surfaces 19.

Incidentally, sputtering is a technique for accumulating metal particles on a substrate (the perpendicular surfaces 14, in here), in which an inert gas (mainly, argon) is introduced in a vacuum, a negative voltage is applied to a target to cause glow discharge and ionize the inert gas (alternatively, it may be in an atomic state without ionization), the gas ions are collided with the surface of the target at a high speed, and the metal particles of the coating-forming material (e.g. Ag, Al, Ni, or else) composing the target are flicked out and attached to the substrate with great force and accumulated thereon.

When performing the sputtering (including the metal particle spraying) to the perpendicular surfaces 14 in a manner where the gas flow 28 is along the inclined surfaces 15 (from a [specific] direction tilted to the perpendicular surfaces 14) such that the inclined surfaces 15 are in shadow, the coating-forming material is hardly attached to the inclined surfaces 15 but is attached to the perpendicular surfaces 14 (also attached to the first minute-flat-surfaces 19). Particularly, the smaller the angle θ1 of the inclined surfaces 15 gets, the more efficiently this selective attachment of the coating-forming material can be done, and also, the selective attachment efficiency becomes higher when employing the inclined surfaces 25 shown in Fig. 3(B) or the inclined surfaces 26 shown in Fig. 3(C).

The metal spraying from a specific direction may be done by using other mirror finish treatments such as metal deposition, spraying of micro metal particles, or ion beam irradiation instead of the aforementioned sputtering. In a case of performing the metal deposition (metal plating), the metal plating attached to the inclined surfaces may be removed by laser, a chemical agent, or else.

### (The third step)

As shown in Fig. 4(C), the top portion of each ridge 17 is made into a non-light-reflective surface by the light-transmission treatment for removing the metal coatings attached to the first minute-flat-surfaces 19 due to the metal spraying in the second step, namely the unnecessary metals 24, with an exfoliation treatment, a polishing treatment (a grinding treatment), or a dissolution treatment (especially when the width of each first minute-flat-surface is beyond 10 µm).

The removal of the unnecessary metals 24 by the exfoliation treatment is done by the following method as shown in Fig. 5(A).

Firstly, a liquid adhesive 30 is applied on the surface of a flat sheet 29.

For the sheet 29, a paper sheet or a fabric sheet may be used; however, it is not particularly limited as long as the sheet has a flat smooth surface, and is hard to be ripped. For the liquid adhesive 30, a resin having the same components as the first synthetic resin or the second synthetic resin may be used; however, a resin requiring less time to harden is preferable in light of work efficiency (hereinbefore: step a).

Next, the molded preform 21 to which the metal spraying has been done is put on the sheet 29 in a manner where the top side (the uneven surface side), i.e. the side on which the first minute-flat-surfaces 19 are provided, of the molded preform 21 comes into contact with the sheet 29.

By this, the unnecessary metals 24 having attached to the first minute-flat-surfaces 19 closely attach to the liquid adhesive 30 on the sheet 29.

So, the liquid adhesive 30 on the sheet 29 is only required to be disposed in a manner where the liquid adhesive 30 evenly spreads over the entire sheet 29 (i.e. in a manner where the liquid adhesive 30 covers the sheet 29), and there is no need to make the liquid adhesive 30 on the sheet 29 thick to an excessive extent (i.e. a very thin state, that is, a state, in which the liquid adhesive 30 is so thin that the liquid adhesive 30 does not attach to the metal coatings 22 formed on the perpendicular surfaces 14, is acceptable. Hereinbefore: step b).

Then, the aforementioned liquid adhesive 30 is hardened to integrate the hardened liquid adhesive 30 and the unnecessary metals 24 (hereinbefore: step c).

After that, the sheet 29 is peeled off from the molded preform 21 while the liquid adhesive 30 is in the hardened state. As concrete methods, there are a method in which the molded preform 21 is put on the upper side of the sheet 29 and the molded preform 21 is lifted up while the sheet 29 is fixed, and a method in which the sheet 29 is put on the upper side of the molded preform 21 and the sheet 29 is peeled off from the molded preform 21 while the molded preform 21 is fixed.

By the above, the unnecessary metals 24 can be exfoliated together with the sheet 29 from the molded preform 21.

Although it is preferred here that only the unnecessary metals 24 be exfoliated, there is no problem with exfoliating a little the metal coatings 22 located in the top portion of each perpendicular surface 14 (i.e. the metal coatings 22 continuing to the unnecessary metals 24) (hereinbefore: step d).

The removal of the unnecessary metals 24 by the polishing treatment is done by the following method as shown in Fig. 5(B).

Firstly, the second synthetic resin 31 is filled up into the grooves 16 of the molded preform 21 to which the metal spraying has been done, and the second synthetic resin 31 is hardened. The filling up the second synthetic resin 31 may be done by the same way as the below-mentioned fourth step. The second synthetic resin 31 has a refractive index of 0.9 to 1.1 times the refractive index of the first synthetic resin forming the plate body 13, as the adhesive 18 does.

Although the second synthetic resin 31 is filled up to a height that is enough to cover the unnecessary metals 24, it is enough to be filled up at least to the upper end of the perpendicular surfaces 14 (i.e. to the surfaces of the first minute-flat-surfaces 19) (hereinbefore: step a).

Subsequently, the top side (i.e. the uneven surface side) of the molded preform 21 is polished until the unnecessary metals 24 formed on the first minute-flat-surfaces 19 are gone. This polishing treatment is done such that the exposed surfaces of the first minute-flat-surfaces 19 become in a transparent state. When polishing, a paste-type abrading material may be used, and also an abrading material that disappears by reacting to a chemical agent may be used (hereinbefore: step b).

The removal of the unnecessary metals 24 by the dissolution treatment is done by the following method.

Firstly, the molded preform 21 to which the metal spraying has been done is disposed in a manner where the grooves 16 face down (hereinbefore: step a).

Next, the unnecessary metals 24 on the first minute-flat-surfaces 19 are soaked with a solvent to be dissolute and removed, during which the molded preform is preferred to be oscillated with mechanical shaking or ultrasonic waves.

The solvent is decided depending on the components of the unnecessary metals 24. For example, when the unnecessary metals are composed of Al, sodium hydrate can be used; when the unnecessary metals are composed of Ag, nitric acid or a hot concentrated sulfuric acid can be used (hereinbefore: step b).

After the unnecessary metals 24 are dissolved, the solvent left on the first minute-flat-surfaces 19 is rinsed with a cleaning fluid such as water, ethanol (an organic solvent) or else (hereinbefore: step c).

Then, the cleaning fluid is dried (hereinbefore: step d) .

By the above, the metal coatings (metal reflective coatings) 22 are formed on the surfaces of the perpendicular surfaces 14, and the surfaces of the metal coatings 22 become the perpendicular light-reflective surfaces 12, thereby the first light-control panel 11 is provided (the same is also the case with the second light-control panel 11a).

To each first minute-flat-surface 19, the non-light-transmission treatment that forms one of the light absorbing coatings 34 to 36 shown in Figs. 6(A) to 6(C) may be performed (especially when the width of each first minute-flat-surface is beyond 10 µm).

The light absorbing coatings 34 shown in Fig. 6(A) are formed by any one of the aforementioned printing techniques on the surfaces of the first minute-flat-surfaces 19 from which the unnecessary metals 24 have been removed.

The light absorbing coatings 35 shown in Fig. 6(B) are formed by any one of the aforementioned printing techniques on the first minute-flat-surfaces 19 without removing the unnecessary metals 24 attached to the first minute-flat-surfaces 19, in other words, in a manner where the light absorbing coatings 35 cover the surfaces of the unnecessary metals 24.

The light absorbing coatings 36 shown in Fig. 6(C) are provided by the following procedures: the first colored coatings 37 are formed by any one of the aforementioned printing techniques on the surfaces of the first minute-flat-surfaces 19 at a timing between after the first step and before the second step (i.e. a coloring treatment for making the first minute-flat-surfaces 19 each placed on the top portion of the triangular cross-section of one of the ridges 17 non-light-reflective); the metal reflective surfaces 23a are formed throughout from the perpendicular surfaces 14 to the surfaces of the first colored coatings 37 by performing the aforementioned metal spraying in the second step; and the second colored coatings 38 are formed by any one of the aforementioned printing techniques, at a timing between after the second step and before the fourth step, such that the second colored coatings 38 cover the surfaces of the formed unnecessary metals 24a (i.e. a coloring treatment for further making the first minute-flat-surfaces 19 non-light-reflective) (the same is also the case with the light absorbing coatings 33a shown in Fig. 2[B]).

In a case where the curved surfaces 19a are each formed on the top portion of one of the ridges 17 of the molded preform 21 in the first step as shown in Figs. 2(A) and 2(B), the curved surfaces 19a can be made into the non-light-reflective surfaces by forming the first colored coatings 37a on the surfaces of the curved surfaces 19a before the second step, and forming the second colored coatings 38a before the fourth step such that the second colored coatings 38a cover the surfaces of the unnecessary metals 24b formed in the second step.

### (The fourth step [the resin filling up step])

Firstly, the two light-control panels (i.e. the first and second light-control panels 11 and 11a) are prepared.

Then, as shown in Fig. 4(D), the first light-control panel 11 manufactured through the first to third steps is placed on a support 32 in a manner where the grooves 16 open upward, and the aforementioned adhesive 18 made of the second synthetic resin is put on the first light-control panel 11. Note that this adhesive 18 is a liquid (e.g. in a jelly state).

As the adhesive 18, it is preferred that any one of an ultraviolet-curable type resin, a thermosetting type resin, a two-component-curable type resin, and a roomtemperature-curable type resin be used. Also, a thermoplastic resin, such as polymethyl methacrylate, amorphous fluororesin, cyclo olefin polymer, polycarbonate for optical use, fluorene-based polyester, and polyether sulfone, may be used.

Subsequently, the second light-control panel 11a is placed on the first light-control panel 11 in a manner where the perpendicular reflective surfaces 12 of the first light-control panel 11 and those of the second light-control panel 11a orthogonally cross when viewed from above, such that the grooves 16 (i.e. the uneven surface side) of the first light-control panel 11 and those of the second light-control panel 11a face each other.

Then, the second light-control panel 11a is pressurized to the first light-control panel 11 with a pressurizer 33 in a deaerated condition (a decompression condition, or moreover a vacuum condition), and the adhesive 18 is filled up into the grooves of the first and second light-control panels 11 and 11a (i.e. the grooves 16 are stuffed with the adhesive 18) and hardened in order to join the first and second light-control panels 11 and 11a with each other.

By joining the first and second control panels 11 and 11a in a deaerated condition like this, air bubbles can be prevented from being generated thereinside. Alternatively, by applying vibration such as ultrasonic waves to the first and second light-control panels 11 and 11a (i.e. by oscillating the panels 11 and 11a) while joining them, air bubbles generated thereinside can be removed.

As the adhesive 18, an adhesive in a plate (sheet) state made from a thermoplastic resin may be used.

In this case, the plate-state adhesive 18 is placed on the first light-control panel 11 first, and the second light-control panel 11a is placed further on the adhesive 18. Then in a deaerated condition, the second light-control panel 11a is pressurized to the first light-control panel 11 with the pressurizer 33, and at the same time, at least the adhesive 18 is heated to be softened (moreover, melted) and filled up into the grooves 16, and after that the adhesive 18 is cooled.

Alternatively, the adhesive 18 can be injected, in a deaerated condition, in between the first and second light-control panels 11 and 11a, which are opposingly disposed such that the grooves 16 of the first light-control panel 11 and those of the second light-control panel 11a face each other. In this case, places except for the places subject to the injection of the adhesive 18 are sealed.

In a case where the unnecessary metals 24 are removed by the polishing treatment in the third step, the grooves 16 of the first and second light-control panels 11 and 11a after the polishing treatment contain the second synthetic resin 31 that has been filled up and hardened.

The first light-control panel 11 with the second synthetic resin 31 filled up and hardened is placed on the support 32 in a manner where the grooves 16 open upward, and a transparent resin (a liquid [a jelly state]) is put on the first light-control panel 11. Subsequently, the second light-control panel 11a with the second synthetic resin 31 filled up and hardened is placed on the first light-control panel 11, in a manner where the perpendicular light-reflective surfaces 12 of the first light-control panel 11 and those of the second light-control panel 11a orthogonally crossed when viewed from above, such that the opening side (i.e. the uneven surface side) of grooves 16 of the first light-control panel 11 and that of the second light-control panel 11a face each other, and the first and second control panels 11 and 11a are joined together by the aforementioned method.

As the transparent resin for joining the first and second light-control panels 11 and 11a, the aforementioned second synthetic resin or a transparent resin (adhesive) with any refractive index can be used.

By the above, the stereoscopic image formation device 10 shown in Fig. 4(E) is completed.

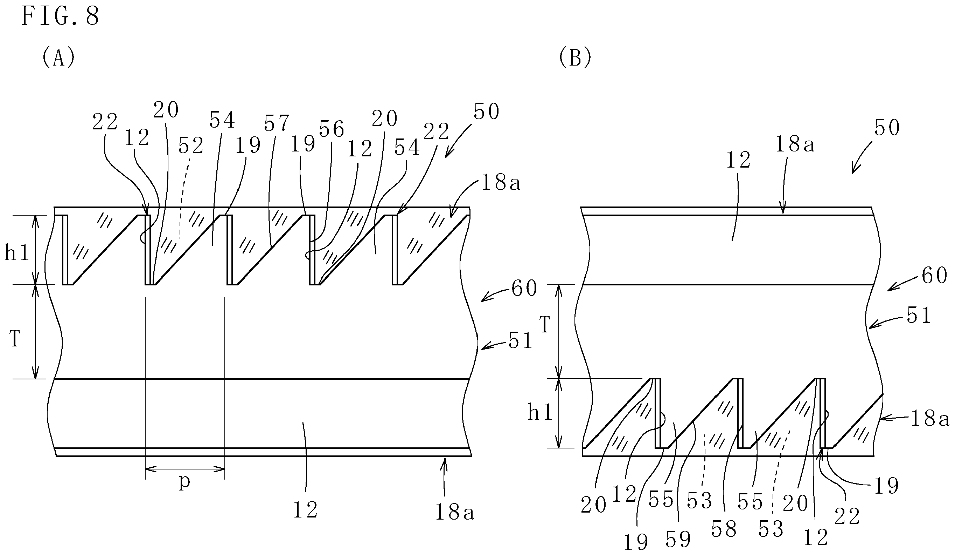

Next, a stereoscopic image formation device 50, which is manufactured by the method for manufacturing a stereoscopic image formation device according to the second embodiment of the present invention, will be explained while referencing to Figs. 8(A) and 8(B). Any components in common with the stereoscopic image formation device 10 will be given the same reference signs and omitted from detailed explanations.

While the stereoscopic image formation device 10 is configured by overlaying and integrating the separately-manufactured first and second light-control panels 11 and 11a in a manner where the grooves of the former and those of the latter face each other, the stereoscopic image formation device 50 is configured by forming grooves 52 and 53 and ridges 54 and 55 on the top side and the bottom side (i.e. on the both sides) of a plate body (a transparent plate body) 51 in an integrated manner using the mold set (not shown in the figures).

The stereoscopic image formation device 50 includes a molded preform 60, which is made from a transparent first synthetic resin, having an uneven surface provided on the top side (one side) of the plate body 51 positioned in the center and also having an uneven surface provided on the bottom side (the other side) of the plate body 51. The uneven surface on the top side is formed of the triangular-cross-sectional grooves (the first grooves) 52 disposed in parallel and the triangular-cross-sectional ridges (the first ridges) 54 disposed in parallel, each groove 52 has a perpendicular surface 56 and an inclined surface 57, and each ridge 54 is formed by the adjacent grooves 52. The uneven surface on the bottom side is formed of the triangular-cross-sectional grooves (the second grooves) 53 disposed in parallel and the triangular-cross-sectional ridges (the second ridges) 55 disposed in parallel, each groove 53 has a perpendicular surface 58 and an inclined surface 59, and each ridge 55 is formed by the adjacent grooves 53. The first minute-flat-surface 19 is formed on the top portion of each triangular-cross-sectional ridge 54 and each triangular-cross-sectional ridge 55 of the molded preform 60.

Instead of the first minute-flat-surface 19, the aforementioned curved surface 19a may be formed. In this case, the curved surface 19a has a circular-arc-shaped cross-section; therefore, the curved surface 19a does not become a minute light-reflective flat surface but a minute light-reflective curved surface even if a metal reflective surface is formed on its surface.

The grooves 52 formed on the top side of the plate body 51 and the grooves 53 formed on the bottom side of the plate body 51 orthogonally cross (including a state where they cross at an angle within a range of, e.g., 85 to 95 degrees; more preferably, 88 to 92 degrees) when viewed from above.

The grooves 52 and 53 have the same configuration as the grooves 16 of the stereoscopic image formation device 10, and the ridges 54 and 55 have the same configuration as the ridges 17 of the stereoscopic image formation device 10. On each of the perpendicular surfaces 56 and 58 of the grooves 52 and 53, the perpendicular light-reflective surface 12 made of the metal coating 22 is formed. Accordingly, the stereoscopic image formation device 50 has the perpendicular light-reflective surfaces 12 formed on the one side and the other side, and the perpendicular light-reflective surfaces 12 on the one side and those on the other side orthogonally cross when viewed from above.

When the height of the perpendicular light-reflective surfaces 12 is h1, the thickness T of the plate body 51 is preferably within a range of, e.g., 0.5 × h1 to 3 × h1 (more preferably, the upper limit is 1 × h1). Also, the aspect ratio (h1/p) that represents the ratio of the height h1 of the perpendicular light-reflective surfaces 12 with respect to the pitch p of the perpendicular light-reflective surfaces 12 is preferably within a range of 0.8 to 5.

The inside of each of the grooves 52 and 53 is stuffed (filled up) with a filler 18a made of a transparent second synthetic resin (the components are the same as the adhesive 18). The surface of the filler (filling member) 18a stuffed in the grooves 52 and 53 does not need to have a particular treatment and may be left as it is, or the surface may be ground (polished) after being hardened as appropriate according to necessity.

Also, on the (exposed) surface of the filler 18a on each of the top and bottom sides, e.g., a transparent flat plate made from the first or second synthetic resin may be disposed. In this case, the transparent flat plates may come into an immediate contact with the top portions (the first minute-flat-surfaces 19) of the ridges 54 and 55, or may have a gap to the top portions of the ridges 54 and 55.

It is preferable to dispose the transparent flat plates on the surfaces of the filler 18a like this because this enables the thickness T of the plate body 51 to be thinner since the stereoscopic image formation device is reinforced thanks to the transparent flat plates.

Since the stereoscopic image formation device 50 is configured by using the molded preform 60 including the grooves and ridges formed on the both sides (the first triangular-cross-sectional grooves and ridges 52 and 54 are formed on the one side and the second triangular-cross-sectional grooves and ridges 53 and 55 are formed on the other side), the first and second grooves and ridges 52 to 55 can be manufactured in an integrated manner, thereby the stereoscopic image formation device 50 comes to be easily manufactured.

As is the case with the stereoscopic image formation device 10, the unnecessary metals 24 having been attached to the first minute-flat-surfaces 19 due to the metal spraying are removed, and the first minute-flat-surfaces 19 are made into the transparent light-transmissible surfaces (non-light-reflective surfaces) (especially when the width of each first minute-flat-surface is beyond 10 µm) . Also, as was mentioned above, the top portions of the first and second ridges 54 and 55 may be made into non-light-transmissible non-light-reflective surfaces by forming on each first minute-flat-surface 19 one of the light absorbing coatings 34 to 36 preventing the light rays from reflecting off the first minute-flat-surfaces 19 (see Figs. 6[A] to 6[C]). In a case of the curved surfaces 19a, the light absorbing coatings 33a are formed on them (see Fig. 2[B]) .

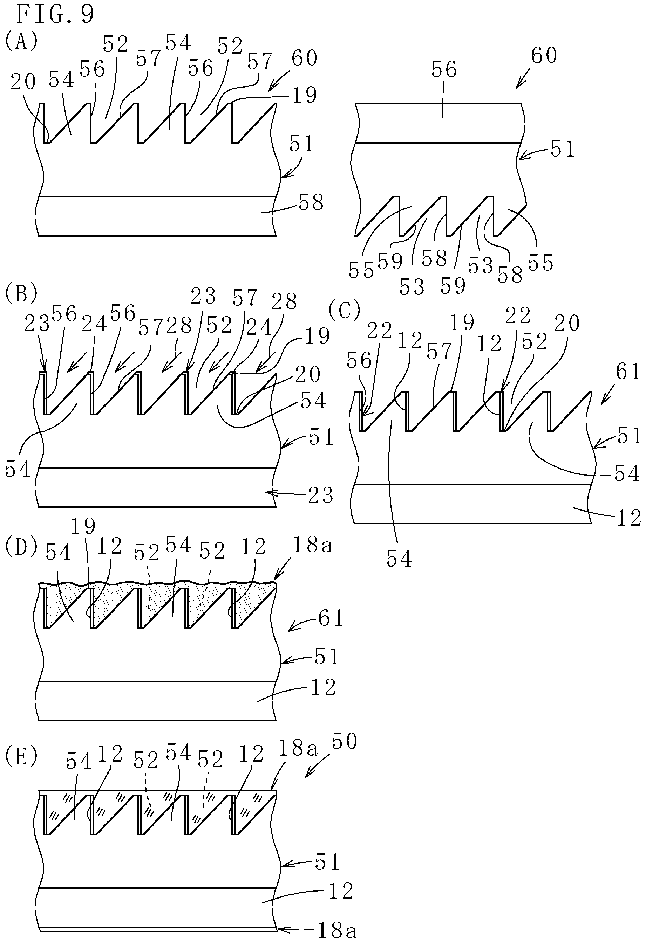

Next, the method for manufacturing the stereoscopic image formation device 50 according to the second embodiment of the present invention will be explained while referencing to Figs. 9(A) to 9(E). Any components in common with the method for manufacturing the stereoscopic image formation device 10 according to the first embodiment will be omitted from detailed explanations.

### (The first step)

The molded preform 60 is manufactured by injection molding. As shown in Fig. 9(A), the molded preform 60 has the plate body 51, on the both sides of which, either the triangular-cross-sectional grooves 52 and the triangular-cross-sectional ridges 54 that are formed by the adjacent grooves 52, or the triangular-cross-sectional grooves 53 and the triangular-cross-sectional ridges 55 that are formed by the adjacent grooves 53, are formed, the first minute-flat-surface 19 is formed at the top portion of each of the ridges 54 and 55 while the second minute-flat-surface 20 is formed at the bottom portion of each of the grooves 52 and 53, and the grooves 52 and the grooves 53 (i.e. the perpendicular surfaces 56 and the perpendicular surfaces 58), which are formed on either side of the plate body 51, are disposed so as to orthogonally cross when viewed from above.

The molded preform 60 is made from the transparent first synthetic resin as is the case with the molded preform 21 of the stereoscopic image formation device 10. Also, as is the case with the molded preform 21 of the stereoscopic image formation device 10, the injection molding is performed by using a mold set including a space, which corresponds to the shape of the molded preform 60, formed thereinside, the first synthetic resin in a molten state is provided into the space of the mold set that has been heated and adjusted to a temperature at which the first synthetic resin is flow-able, and the mold set is rapidly cooled after the first synthetic resin spreads and reaches the tips (in here, the upper tips and the lower tips) of the parts of the space for forming the first and second ridges 54 and 55 of the molded preform 60 each having the triangular cross-section (see Fig. 7).

### (The second step)

As shown in Fig. 9(B), e.g., sputtering is performed to the perpendicular surfaces 56. By this, the metal reflective surfaces 23 are formed throughout from on the perpendicular surfaces 56 to on the first minute-flat-surfaces 19. Specifically, the sputtering (including the metal particle spraying) is performed to the perpendicular surfaces 56 in a manner where the gas flow 28 is along the inclined surfaces 57 (i.e. from a [specific] direction tilted to the perpendicular surfaces 56) such that the inclined surfaces 57 are in shadow. Also to the perpendicular surfaces 58, a mirror finish treatment is performed in the same way.

As the mirror finish treatment, the metal spraying may be performed by the metal deposition, spraying of micro metal particles, or the ion beam irradiation, instead of the sputtering.

### (The third step)

As shown in Fig. 9(C), the light-transmission treatment is performed in order to make the first minute-flat-surfaces 19 non-light-reflective (especially when the width of each first minute-flat-surface is beyond 10 µm) by removing the metal coatings attached to the first minute-flat-surfaces 19 due to the metal spraying in the second step, i.e. the unnecessary metals 24, with the exfoliation treatment, the polishing treatment (the grinding treatment), or the dissolution treatment. Incidentally, to each first minute-flat-surface 19 the non-light-transmission treatment that forms one of the light absorbing coatings 34 to 36 may be alternatively performed as was mentioned above (see Figs. 6[A] to 6[C]). In a case of the curved surfaces 19a, the light absorbing coating 33a is formed on each curved surface 19a (see Fig. 2[B]).

The above forms the metal coatings (the metal reflective coatings) 22 on the surfaces of the perpendicular surfaces 56 on the one side and the perpendicular surfaces 58 on the other side, and the surfaces of the metal coatings 22 become the perpendicular light-reflective surfaces 12, thereby the stereoscopic image formation device 61 can be provided.

### (The fourth step)

As shown in Fig. 9(D), the filler 18a made of the aforementioned second synthetic resin is put upon the stereoscopic image formation device body 61, filled up into the grooves 52, and hardened. After that, the stereoscopic image formation device body 61 is turned upside down, and the filler 18a made of the aforementioned second synthetic resin is put upon the turned stereoscopic image formation device body 61, filled up into the grooves 53, and hardened. The filler 18a used here is a liquid (e.g. in a jelly state).

Filling up the grooves 52 and 53 with the filler 18a is preferred to be done in a deaerated condition. Also, when filling up the grooves 52 and 53 with the filler 18a (or after filling up), a leveling treatment is preferably performed. Besides the case of pressurizing by a pressurizer or else and a case of molding by a mold set, the leveling treatment includes cases of employing the grinding or polishing, and placing a transparent flat plate upon the liquid filler 18a.

In a case where the unnecessary metals 24 are removed by the polishing treatment in the third step, the treatment in the fourth step is not necessary.

By the above, the stereoscopic image formation device 50 shown in Fig. 9(E), which is in a flat plate state and has flat exposed surfaces, is obtained.

In the above embodiments, the molded preform comes to have more even flat surfaces by performing the mold injection in a manner where the resin is filled up into the mold set while the mold set is vertically held. Demolding is performed after hardening the first synthetic resin by dropping the temperature of the mold set lower than the glass-transition temperature Tg of the first synthetic resin by rapidly cooling the mold set (i.e. through the heating and cooling treatment).

The present invention has been described above with reference to the embodiments. However, the present invention is not limited to the structures described in the above embodiments, and the present invention includes other embodiments and modifications conceivable within the scope of the matters described in the scope of the claims. For example, cases where a part/parts of or the entirety of any of the embodiments and modifications described above are combined to configure a method for manufacturing a stereoscopic image formation device and/or a stereoscopic image formation device according to the present invention are also included within the scope of rights of the present invention.

Although the cases where the treatments each for making the curved surfaces or the minute-flat-surfaces into the non-light-reflective surfaces are performed, have been explained in the above embodiments, the treatments are not necessarily performed depending on, e.g., the width of each minute-flat-surface (i.e. when it is narrow) and/or the qualities required for the product (i.e. the situations where the metal coatings are formed also on the minute-flat-surfaces and the metal reflective surfaces are formed throughout from on the perpendicular surfaces to on the minute-flat-surfaces, can be also acceptable). Also, there may be cases where the metal coatings (the metal reflective surfaces), namely the unnecessary metals, are not formed because the width of each minute-flat-surface is extremely narrow as was mentioned above.

### Industrial Applicability

The method for manufacturing a stereoscopic image formation device and the stereoscopic image formation device according to the present invention enable a stereoscopic image formation device, which has a relatively high aspect ratio and is capable of providing a clear image, to be easily manufactured at a low cost. This makes it possible to effectively use the stereoscopic image formation device with apparatuses that require images (e.g. medical appliances, home appliances, automobiles, aircrafts, vessels, or else).

### Reference Signs List

10: stereoscopic image formation device, 11: first light-control panel, 11a: second light-control panel, 12: perpendicular light-reflective surface, 13: plate body, 14: perpendicular surface, 15: inclined surface, 16: groove, 17: ridge, 18: adhesive, 18a: filler, 19: first minute-flat-surface, 19a: curved surface, 20: second minute-flat-surface, 21: molded preform, 22: metal coating, 23, 23a, 23b: metal reflective surface, 24, 24a, 24b: unnecessary metal, 25, 26: inclined surface, 27: hypothetical flat surface, 28: gas flow, 29: sheet, 30: liquid adhesive, 31: second synthetic resin, 32: support, 33: pressurizer, 33a: light absorbing coating, 34 to 36: light absorbing coating, 37, 37a: first colored coating, 38, 38a: second colored coating, 39: space, 40: mold set, 41, 42: mold, 43: groove portion, 44: bottom surface, 45: tip, 46: molten first synthetic resin, 50: stereoscopic image formation device, 51: plate body, 52, 53: groove, 54, 55: ridge, 56: perpendicular surface, 57: inclined surface, 58: perpendicular surface, 59: inclined surface, 60: molded preform, 61: stereoscopic image formation device body

## Claims

1. A method for manufacturing a stereoscopic image formation device having a first light-control panel and a second light-control panel, each of the first and second light-control panels having on one side thereof a plurality of perpendicular light-reflective surfaces formed perpendicularly and spaced in parallel, the first and second light-control panels overlaid with each other in a manner where the perpendicular light-reflective surfaces of the first light-control panel and the perpendicular light-reflective surfaces of the second light-control panel orthogonally cross when viewed from above, the method for manufacturing a stereoscopic image formation device comprising as steps for manufacturing each of the first and second light-control panels:
a first step of manufacturing by injection molding a molded preform made from a transparent first synthetic resin, the molded preform manufactured by forming on one side of a plate body an uneven surface having triangular-cross-sectional grooves disposed in parallel and triangular-cross-sectional ridges disposed in parallel, the triangular-cross-sectional grooves each having an inclined surface and a perpendicular surface, the triangular-cross-sectional ridges each formed by the adjacent triangular-cross-sectional grooves; and
a second step of forming the perpendicular light-reflective surfaces by spraying a metal to the perpendicular surfaces from a tilted direction in a manner where the inclined surfaces become in shadow,
the method for manufacturing a stereoscopic image formation device further comprising:
a resin filling up step of filling up a transparent second synthetic resin into the grooves of the manufactured first and second light-control panels, overlaying the first and second light-control panels in a manner where the uneven surface side of the first light-control panel and the uneven surface side of the second light-control panel face each other with the second synthetic resin in between, and hardening and integrating the first and second light-control panels through the second synthetic resin,
wherein in the injection molding of the first step, a mold set having thereinside a space corresponding to the shape of the molded preform is used, the first synthetic resin in a molten state is provided into the space of the mold set having been heated and adjusted to a temperature at which the first synthetic resin is flow-able, the mold set is rapidly cooled after the first synthetic resin spreads and reaches tips of parts of the space for forming the ridges of the molded preform each having the triangular-cross-section,
further wherein the difference between a refractive index η1 that represents the refractive index of the first synthetic resin and a refractive index η2 that represents the refractive index of the second synthetic resin is 0.1 or less.

2. A method for manufacturing a stereoscopic image formation device comprising:
a first step of manufacturing by injection molding a molded preform made from a transparent first synthetic resin, the molded preform manufactured by forming an uneven surface on each of one side and the other side of a plate body, the uneven surface having triangular-cross-sectional grooves disposed in parallel and triangular-cross-sectional ridges disposed in parallel, the triangular-cross-sectional grooves each having an inclined surface and a perpendicular surface, the triangular-cross-sectional ridges each formed by the adjacent triangular-cross-sectional grooves, the perpendicular surfaces formed on the one side of the plate body and the perpendicular surfaces formed on the other side of the plate body being in an orthogonally-crossed state when viewed from above;
a second step of forming perpendicular light-reflective surfaces on each of the one side and the other side of the molded preform by spraying a metal to the perpendicular surfaces from a tilted direction in a manner where the inclined surfaces become in shadow; and
a resin filling up step of filling up a transparent second synthetic resin into the grooves after the second step, and hardening the second synthetic resin,
wherein in the injection molding of the first step, a mold set having thereinside a space corresponding to the shape of the molded preform is used, the first synthetic resin in a molten state is provided into the space of the mold set having been heated and adjusted to a temperature at which the first synthetic resin is flow-able, the mold set is rapidly cooled after the first synthetic resin spreads and reaches tips of parts of the space for forming the ridges of the molded preform each having the triangular-cross-section,
further wherein the difference between a refractive index η1 that represents the refractive index of the first synthetic resin and a refractive index η2 that represents the refractive index of the second synthetic resin is 0.1 or less.

3. The method for manufacturing a stereoscopic image formation device set forth in claim 1 or 2, wherein the top portion of the triangular cross-section of each of the ridges of the molded preform manufactured in the first step has a circular-arc-shaped cross-section and the circular-arc-shaped cross-section has a curvature radius of 1 to 20 µm.

4. The method for manufacturing a stereoscopic image formation device set forth in claim 1 or 2, wherein the top portion of the triangular cross-section of each of the ridges of the molded preform manufactured in the first step has a minute-flat-surface formed with a width of 10 µm or less.

5. The method for manufacturing a stereoscopic image formation device set forth in any one of claims 1 to 4, wherein a non-light-transmission treatment for making the top portion of the triangular cross-section of each of the ridges non-light-reflective is performed before the second step, and the non-light-transmission treatment for making the top portion non-light-reflective is further performed to the top portion of the triangular cross-section of each of the ridges at a timing between after the second step and before the resin filling up step.

6. A stereoscopic image formation device having a first light-control panel and a second light-control panel, each of the first and second light-control panels including a group of band-shaped light-reflective surfaces disposed in a standing state and spaced in parallel, the first and second light-control panels overlaid with each other in a manner where the group of band-shaped light-reflective surfaces of the first light-control panel and the group of band-shaped light-reflective surfaces of the second light-control panel orthogonally cross when viewed from above, the stereoscopic image formation device comprising in each of the first and second light-control panels:
a molded preform made from a transparent first synthetic resin, the molded preform having an uneven surface on the top side of a plate body, the uneven surface formed by triangular-cross-sectional grooves disposed in parallel and triangular-cross-sectional ridges disposed in parallel, the triangular-cross-sectional grooves each having an inclined surface and a perpendicular surface, the triangular-cross-sectional ridges each formed by the adjacent triangular-cross-sectional grooves;
perpendicular light-reflective surfaces formed on the perpendicular surfaces; and
a transparent second synthetic resin filled up into the grooves,
wherein the top portion of the triangular cross-section of each of the ridges of the molded preform has:
(1) a circular-arc-shaped cross-section and the circular-arc-shaped cross-section has a curvature radius of 1 to 20 µm; or
(2) a minute-flat-surface formed with a width of 10 µm or less,
further wherein the difference between a refractive index η1 that represents the refractive index of the first synthetic resin and a refractive index η2 that represents the refractive index of the second synthetic resin is 0.1 or less.

7. The stereoscopic image formation device set forth in claim 6, wherein the top portion of the triangular cross-section of each of the ridges is a non-light-reflective surface.

8. A stereoscopic image formation device comprising:
a molded preform made from a transparent first synthetic resin, the molded preform having an uneven surface on each of the both sides of a plate body, the uneven surface on one side of the plate body formed by first triangular-cross-sectional grooves disposed in parallel and first triangular-cross-sectional ridges disposed in parallel, the first triangular-cross-sectional grooves each having a perpendicular surface and an inclined surface, the first triangular-cross-sectional ridges each formed by the adjacent first triangular-cross-sectional grooves, the uneven surface on the other side of the plate body formed by second triangular-cross-sectional grooves disposed in parallel and second triangular-cross-sectional ridges disposed in parallel, the second triangular-cross-sectional grooves each having a perpendicular surface and an inclined surface, the second triangular-cross-sectional ridges each formed by the adjacent second triangular-cross-sectional grooves, the first grooves formed on the one side and the second grooves formed on the other side disposed so as to orthogonally cross when viewed from above;
perpendicular light-reflective surfaces formed on the perpendicular surfaces of both of the first grooves on the one side of the molded preform and the second grooves on the other side of the molded preform; and
a transparent second synthetic resin filled up into the first and second grooves,
wherein the top portion of the triangular cross-section of each of the first and second ridges of the molded preform has:
(1) a circular-arc-shaped cross-section and the circular-arc-shaped cross-section has a curvature radius of 1 to 20 µm; or
(2) a minute-flat-surface formed with a width of 10 µm or less,
further wherein the difference between a refractive index η1 that represents the refractive index of the first synthetic resin and a refractive index η2 that represents the refractive index of the second synthetic resin is 0.1 or less.

9. The stereoscopic image formation device set forth in claim 8, wherein the top portion of the triangular cross-section of each of the first and second ridges is a non-light-reflective surface.
